# EUROPÄISCHE PATENTSCHRIFT

(11) **EP 3 817 954 B1**
(45) Veröffentlichungstag und Bekanntmachung des Hinweises auf die Patenterteilung: **05.07.2023**
(21) Anmeldenummer: 19728011.8
(22) Anmeldetag: 29.05.2019
(51) Int. Cl.: B60S 3/04

(54) **VORRICHTUNG ZUR REINIGUNG VON ZWEIRÄDERN**
DEVICE FOR CLEANING TWO-WHEELED VEHICLES
ARRANGEMENT DE NETTOYAGE DE VÉHICULES À DEUX ROUES

(30) Priorität: 06.07.2018 DE 102018116421
(43) Veröffentlichungstag der Anmeldung: 12.05.2021
(73) Patentinhaber: Kumar, Sachin, 50668 Cologne (DE)
(72) Erfinder: Kumar, Sachin, 50668 Cologne (DE)
(74) Vertreter: Freischem & Partner Patentanwälte mbB
(86) Internationale Anmeldenummer: PCT/EP2019/063958
(87) Internationale Veröffentlichungsnummer: WO 2020/007539

(56) Entgegenhaltungen:
- CN-U- 207 208 020
- DE-C1- 4 325 973
- DE-U1- 29 506 873
- US-A1- 2009 217 955

## Beschreibung

Die Erfindung betrifft eine Vorrichtung zur Reinigung von Zweirädern.

Während für PKWs weitgehend ausgereifte automatisierte Waschanlagen zur Verfügung stehen, erfolgt die Reinigung von Zweirädern derzeit in der Praxis manuell. Dies ist zeitraubend und umständlich.

Die zur Reinigung von PKWs bekannten Waschanlagen hinsichtlich ihrer Abmessungen auf die Reinigung von Zweirädern anzupassen, stellt keine praktikable Lösung dar. Für eine derartige Anlage wird ein geeignetes bauliches Umfeld benötigt, in dem eine solche Anlage betrieben werden kann. Am Aufstellungsort der Anlage muss eine geeignete Nasszelle bereitgestellt werden. Die hierfür erforderlichen baulichen Maßnahmen sind zum einen teuer, zum anderen erfordern sie einen erheblichen Raumbedarf. Dies ist gerade an den Orten, wo sich Vorrichtungen der in Rede stehenden Art wirtschaftlich sinnvoll betreiben lassen würden, ungünstig. Es ist davon auszugehen, dass der Betrieb einer Vorrichtung der in Rede stehenden Art insbesondere in Ballungszentren mit hoher Bevölkerungsdichte, wo es aufgrund der Verkehrssituation zu einem hohen Anteil von Zweirädern am Straßenverkehr kommt, sinnvoll. Gerade in solchen Gebieten stellt die Bereitstellung eines geeigneten umbauten Raumes eine erhebliche Hürde für die Realisierung des Betriebs einer entsprechenden Vorrichtung dar.

Eine solche Vorrichtung ist unter anderem aus der WO 2017/072167 A1 bekannt. Die dort gezeigte Vorrichtung weist ein halboffenes Gehäuse auf, in dem zwei um eine vertikale Achse rotierende Bürsten angeordnet sind. Das zu reinigende Zweirad kann manuell an diesen Bürsten vorbei bewegt werden.

Die Vorrichtung ist zwar relativ kompakt und kostengünstig, jedoch ist der Vorgang der Reinigung des Zweirads gegenüber einer rein manuellen Reinigung erheblich vereinfacht, dennoch erfordert die Vorrichtung die manuelle Handhabung des Zweirades während der Reinigung. Darüber hinaus bietet das halb offene Gehäuse nur einen begrenzten Spritzwasserschutz während dem Reinigungsvorgang, wodurch die Aufstellung einer derartigen Vorrichtung, zum Beispiel in geschlossenen Räumen, nicht immer unproblematisch ist.

Aus der EP 2 729 331 B1 ist eine ebenfalls vergleichsweise kompakte Vorrichtung zum Reinigen von Zweirädern bekannt. Die Zweiräder werden bei dieser Vorrichtung in einem Spritzschutzgehäuse aufgenommen. Während des Reinigungsvorgangs werden rotierende Bürsten an dem Fahrrad entlang bewegt. Die vergleichsweise kompakte Anordnung der Bürsten in dem Spritzschutzgehäuse wird dadurch ermöglicht, dass die Bürsten an einem Schlitten angeordnet sind, der mittels einer Führungseinrichtung bewegt wird. Die Führungseinrichtung ist unterhalb des Bodens des Spritzschutzgehäuses, welcher das zur Reinigung erforderliche Wasser auffängt, angeordnet. Der Schlitten mit den Führungen ist so zwar vor Spritzwasser geschützt, um den Schlitten unterhalb der Bodenwanne des Gehäuses anordnen zu können, ergibt sich eine vergleichsweise große Höhe der Vorrichtung. Zum Einführen des Zweirades in das Spritzschutzgehäuse muss dieses jedoch an Lenker und Sattel gegriffen und in das Gehäuse geschoben werden. Für kleinwüchsige Personen gestaltet sich dieser Vorgang aufgrund der Bauhöhe des Gehäuses unkomfortabel. Um den Schlitten überhaupt mit den rotierenden Reinigungsbürsten verbinden zu können, sind diese an "Armen" befestigt, welche die Bodenwanne des Gehäuses umgreifen. Die Arme müssen zwischen Boden und Seitenwänden des Gehäuses hindurchgeführt werden, um die rotierenden Bürsten mit dem Schlitten zu verbinden. Diese Konstruktion ist ebenso aufwändig wie anfällig. EP-B1-2 729 331 offenbart den Oberbegriff des Anspruchs 1.

Der Erfindung liegt daher die Aufgabe zugrunde, eine Vorrichtung zur Reinigung von Zweirädern zur Verfügung zu stellen, die kompakt und dennoch einfacher zu handhaben ist als die aus dem Stand der Technik bekannten Vorrichtungen.

Die Aufgabe wird gelöst durch eine Vorrichtung mit den Merkmalen des Anspruchs 1. Die Merkmale der abhängigen Ansprüche betreffen vorteilhafte Ausführungsformen.

Die Vorrichtung weist ein Spritzschutzgehäuse auf. Das Spritzschutzgehäuse dient dazu, die Umgebung, in der die Vorrichtung aufgestellt wird, vor der Reinigungsflüssigkeit zu schützen.

Das Spritzschutzgehäuse kann Verkleidungselemente aus Kunststoff aufweisen, die an einem Rahmen angebracht sind. Der Rahmen besteht bevorzugt aus einem metallischen Werkstoff. Hierdurch lässt sich ein leichtes und stabiles Spritzschutzgehäuse in kostengünstiger Art und Weise realisieren.

Bei dem Hauptbestandteil der Reinigungsflüssigkeit kann es sich um Wasser handeln. Die Reinigungsflüssigkeit kann darüber hinaus weitere Zusatzstoffe, insbesondere solche, die die Reinigung des Zweirades unterstützen, beinhalten. Bei den Zusatzstoffen kann es sich insbesondere um Tenside handeln.

Unter Zweirädern im Sinne der vorliegenden Erfindung sind insbesondere Fahrräder zu verstehen. Hierunter fallen auch Fahrräder, die einen elektrischen Antrieb aufweisen, insbesondere sogenannte ebikes oder Pedelecs. Darüber hinaus können jedoch auch grundsätzlich andere Arten von Zweirädern, wie beispielsweise Mofas, Mopeds, Motorräder und dergleichen mit den in Rede stehenden Vorrichtungen gereinigt werden.

Die Vorrichtung ist dazu ausgebildet, das zu reinigende Zweirad, zumindest teilweise, so aufzunehmen, dass wenigstens eines der Räder des zu reinigenden Zweirades in die in der Bodenwanne enthaltene Reinigungsflüssigkeit eintaucht. Durch das Eintauchen des Rades in die Reinigungsflüssigkeit wird insbesondere eine gründliche Reinigung des Reifens erzielt. Die Vorrichtung kann ein Überlauf aufweisen. Ein derartiger Überlauf kann sicherstellen, dass sich die Oberfläche des in der Bodenwanne aufgenommenen Vorrats an Reinigungsflüssigkeit immer in der richtigen Höhe befindet. Die Vorrichtung kann ein Ausgleichstank aufweisen, der die durch den Überlauf ablaufende überschüssige Reinigungsflüssigkeit aufnimmt, bevor diese wieder auf das Zweirad gesprüht wird.

Unter einer zumindest teilweisen Aufnahme des Zweirades in der Vorrichtung ist in diesem Zusammenhang insbesondere zu verstehen, dass einzelne Teile des Zweirades, insbesondere der Lenker und/oder der Sattel, außerhalb des Spritzschutzgehäuses angeordnet sein können, während das Zweirad gereinigt wird. Dies ermöglicht in vorteilhafter Weise eine besonders kompakte Gestaltung des Spritzschutzgehäuses. Insbesondere durch das Herausragen von Lenker und/oder Sattel aus dem Spritzschutzgehäuse wird es ermöglicht, die Höhe des Spritzschutzgehäuses zu begrenzen. Durch die Begrenzung der Höhe des Spritzschutzgehäuses wird wiederum die Bedienung erheblich vereinfacht, da so beim Einbringen des Zweirades in das Spritzschutzgehäuse bzw. beim Entnehmen des Zweirades aus dem Spritzschutzgehäuse das Zweirad bequemer an Lenker und/oder Sattel gegriffen werden kann. Insbesondere für kleinwüchsige Personen ist in diesem Zusammenhang ein niedriges Spritzschutzgehäuse vorteilhaft, wenn die Person über das Gehäuse hinweggreifen muss, um Sattel und/oder Lenker des Zweirades zu erreichen.

Die Gestaltung der Vorrichtung, die dazu führt, dass bei der Reinigung des Zweirades wenigstens eines der Räder in die Reinigungsflüssigkeit eintaucht hat den Vorteil, dass eine besonders gründliche Reinigung der Reifen ermöglicht wird. Diese kommen bei der Benutzung des Zweirades am stärksten mit Schmutz in Kontakt und bedürfen daher einer besonders intensiven Reinigung.

In diesem Zusammenhang kann es insbesondere vorteilhaft sein, wenn die Vorrichtung einen Ultraschallgenerator zur Erzeugung von Ultraschall aufweist. Dieser ist bevorzugt so angeordnet, dass er zumindest teilweise, vorzugsweise vollständig, in die Reinigungsflüssigkeit eintaucht. Angeordnet ist der Ultraschallgenerator insbesondere in dem Bereich, der in der Bodenwanne aufgenommenen Reinigungsflüssigkeit, in den auch ein Rad des Zweirades eintaucht. Der Ultraschallgenerator befindet sich dabei insbesondere wenigstens zwei Zentimeter und/oder höchstens zehn Zentimeter von dem zu reinigenden Rad des Zweirades entfernt. Besonders vorteilhaft ist es, wenn der Ultraschallgenerator wenigstens vier und höchstens sieben, insbesondere etwa fünf Zentimeter von dem zu reinigenden Rad, insbesondere von dem zu reinigenden Reifen, angeordnet ist.

Es versteht sich in diesem Zusammenhang, dass die Vorrichtung in besonders vorteilhafter Weise das Zweirad so aufnehmen kann, dass beide Räder des zu reinigenden Zweirades in die in der Bodenwanne enthaltene Reinigungsflüssigkeit eintauchen. In diesem Fall ist es besonders vorteilhaft, wenn die Vorrichtung für jedes der Räder einen entsprechend angeordneten Ultraschallgenerator aufweist.

Die Vorrichtung weist eine Reinigungseinrichtung auf, die mittels einer horizontalen Führungseinrichtung entlang des Zweirades beweglich ist. Hierunter ist insbesondere eine Bewegung der Reinigungseinrichtung in einer horizontalen und zur Längsrichtung des Zweirades parallelen Richtung zu verstehen. Die Längsrichtung des Zweirades entspricht der Fahrtrichtung des Zweirades bei Geradeausfahrt.

Insbesondere ist die Reinigungseinrichtung entlang und entgegen dieser Richtung hin- und her bewegbar.

Die Führungseinrichtung ist oberhalb des Bodens der Bodenwanne angeordnet. Insbesondere ist die Führungseinrichtung innerhalb des Spritzschutzgehäuses angeordnet. Durch diese Anordnung wird die besonders kompakte Bauweise der Vorrichtung ermöglicht. Es hat sich gezeigt, dass ein zuverlässiger und störungsfreier Betrieb auch dann möglich ist, wenn die Führungseinrichtung oberhalb der Bodenwanne und innerhalb des Spritzschutzgehäuses angeordnet ist, wo sie, zumindest teilweise, der Reinigungsflüssigkeit ausgesetzt ist. Der Vorteil der kompakten Bauweise überwiegt daher den Vorteil, den eine andere Anordnung der Führungseinrichtung, wie beispielsweise nach dem Stand der Technik unterhalb der Bodenwanne, mit sich bringen würde.

Die Führungseinrichtung kann eine obere und/oder eine untere Führung aufweisen, entlang derer die Reinigungseinrichtung verschiebbar ist. Insbesondere wird bei einer derartigen Anordnung die Gewichtskraft der Reinigungseinrichtung, zumindest überwiegend, von der unteren Führung aufgenommen. Hierunter ist insbesondere zu verstehen, dass die untere Führung wenigstens 80%, vorzugsweise wenigstens 95% der Gewichtskraft der Reinigungseinrichtung aufnimmt. Dies kann insbesondere dadurch erreicht werden, dass die untere Führung derart gestaltet ist, dass sie Kräfte in Höhenrichtung und Querrichtung aufnehmen kann, während die obere Führung derart gestaltet ist, dass sie lediglich Kräfte in Querrichtung aufnimmt.

Die untere Führung ist bevorzugt derart gestaltet, dass die untere Halterung die die Reinigungseinrichtung mit der unteren Führung verbindet, ein Spritzschutzelement untergreift, welches zwischen der Reinigungseinrichtung und der unteren Führung angeordnet ist. Auf diese Weise wird die untere Führung wirksam vor Schmutz und Reinigungsflüssigkeit geschützt, gleichzeitig kann eine stabile Verbindung zwischen der Reinigungseinrichtung und der unteren Führung hergestellt werden. Ein Führungsschlitten kann die untere Halterung mit der unteren Führung verbinden. Die Vorrichtung kann so gestaltet sein, dass eine obere Halterung die Reinigungseinrichtung, vorzugsweise im Bereich ihres oberen Endes, mit der oberen Führung verbindet.

Es ist möglich, die Vorrichtung, insbesondere die obere Halterung, so zu gestalten, dass die obere Führung in der Querrichtung des in der Vorrichtung zur Reinigung aufgenommenen Zweirads gegenüber der unteren Führung von dem Zweirad weg versetzt angeordnet ist.

Unter der Querrichtung ist jene zur Längsrichtung des Zweirades rechtwinklige horizontale Richtung zu verstehen, die einer Richtung quer zur "Fahrtrichtung" des Zweirades entsprechen würde.

Weiterhin kann die Vorrichtung, insbesondere die obere Halterung, derart gestaltet und/oder angeordnet sein, dass die Verbindung zwischen der oberen Halterung und der Reinigungseinrichtung in einer größeren Höhe angeordnet ist als die Verbindung zwischen der oberen Halterung und der Führung, die beispielsweise ein Führungsschlitten sein kann. Dies kann beispielsweise dadurch erreicht werden, dass die Halterung als gewinkeltes und/oder profiliertes Blech ausgeführt ist. Hierdurch wird erreicht, dass sich die Reinigungseinrichtung über einen möglichst großen Höhenbereich des zu reinigenden Zweirades erstrecken kann. Insbesondere wird eine möglichst große Erstreckung hinsichtlich der maximal durch die Reinigungseinrichtung erreichbaren Höhe des Zweirades ermöglicht. Gleichzeitig kann jedoch die Oberseite des Spritzschutzgehäuses auf einer vergleichsweise niedrigen Höhe angeordnet sein, da die obere Führung nicht zwischen der Reinigungseinrichtung und der Oberseite des Spritzschutzgehäuses angeordnet ist, sondern vielmehr gegenüber dem oberen Ende der Reinigungseinrichtung seitlich und/oder nach unten versetzt angeordnet ist. Das Gehäuse kann so eine Oberseite aufweisen, die mit möglichst kurzem Abstand von dem oberen Ende der Reinigungseinrichtung angeordnet ist. Dies ist insbesondere vor dem Hintergrund hilfreich, dass es eine Vielzahl unterschiedlich hoch angeordneter und geformter Fahrradlenker gibt. Dies führt, wenn der Lenker während der Reinigung aus dem Spritzschutzgehäuse herausragt regelmäßig dazu, dass ein gewisser Abstand zwischen dem Lenker und dem höchsten durch die Reinigungseinrichtung zu erreichenden Punkt, eingehalten werden muss. Um hier eine möglichst gute Reinigung bei möglichst vielen unterschiedlich ausgebildeten Zweirädern zu ermöglichen, ist es daher vorteilhaft, den Abstand zwischen der Oberseite des Spritzschutzgehäuses und dem oberen Ende der Reinigungseinrichtung möglichst gering zu halten.

Die Reinigungseinrichtung kann eine rotierende Bürste aufweisen. Die Rotationsachse der rotierenden Bürste kann vertikal orientiert sein. Das obere Ende der rotierenden Bürste kann in einer Höhe von wenigstens 70 Zentimeter, insbesondere wenigstens 80 Zentimeter oberhalb des untersten Punktes des Zweirades angeordnet sein. Die Vorrichtung, insbesondere die obere Halterung, kann so gestaltet sein, dass die obere Führung in Querrichtung des Zweirades gegenüber der Rotationsachse versetzt ist. In diesem Zusammenhang kann die obere Führung von der Rotationsachse einen Abstand von wenigstens 10 Zentimetern, insbesondere von wenigstens 20 Zentimetern aufweisen.

Die Reinigungseinrichtung, insbesondere die obere Haltung und/oder die untere Halterung, kann mit der Führungseinrichtung, insbesondere mit der oberen Führung und/oder der unteren Führung, über Wälzlager verbunden sein. Insbesondere handelt es sich um Rollenlager. Es hat sich gezeigt, dass insbesondere unter den in der Vorrichtung herrschenden Umgebungsbedingungen Wälzlager einen wesentlichen Vorteil gegenüber Gleitlagern aufweisen. Der Widerstand zum Bewegen der Vorrichtung entlang der Führungseinrichtung und damit entlang des Zweirades wird hierdurch reduziert, was insbesondere in Zusammenhang mit der pneumatischen Betriebsweise von Vorteil ist. Es müssen geringere Kräfte zum Bewegen der Reinigungseinrichtung aufgewendet werden, wodurch auch die Kräfte, die auf etwaige Hindernisse, die in den Weg der Reinigungseinrichtung geraten, ausgeübt werden, entsprechend reduziert werden, insbesondere im Vergleich zu reinen Gleitlagerungskonzepten. Dabei können die Wälzlager, insbesondere die Wälzkörper der Wälzlager selbstschmierend ausgebildet sein. Die Selbstschmierung kann insbesondere darauf beruhen, dass Kunststoffpartikel, die aus dem Wälzlager, insbesondere aus Wälzkörpern oder Lagerschalen stammen, selbst als Schmierstoff wirken.

Durch die vorstehend beschriebene Anordnung der oberen Führung relativ zur Rotationsachse der rotierenden Bürste kann sich die rotierende Bürste vergleichsweise weit in die Höhe erstrecken, während die obere Führung und damit auch die Oberseite des Spritzschutzgehäuses auf einem möglichst niedrigen Höhenniveau angeordnet werden kann.

Die rotierende Bürste kann durch eine Lageranordnung gelagert sein, die zwei Radiallager und ein Axiallager aufweist. Die Radiallager sind insbesondere im Bereich beider Enden der Bürste angeordnet.

Bei der rotierenden Bürste kann es sich um eine Hybridbürste handeln. Die Bürste kann einen Grundkörper aufweisen, in der der Antrieb für die rotierende Bewegung der Bürste angeordnet ist. Eine derartige Anordnung des Antriebs in dem Grundkörper der Bürste führt insbesondere dazu, dass keine zusätzliche Höhe für den Antrieb benötigt wird.

Die rotierende Bürste kann einen abnehmbaren Borstenbesatz aufweisen. Ein derartiger Besatz ist in einfacher Weise austauschbar, wenn die Borsten abgenutzt sind.

Die Bürste kann langgestreckte Schaumstoffelemente aufweisen. Diese können beispielsweise aus Polyurethan sein. Alternativ und/oder ergänzend kann die Bürste Borsten aufweisen. Die Borsten können einen profilierten, insbesondere x-förmigen, Querschnitt aufweisen. Dies verbessert den Transport der Reinigungsflüssigkeit zu den Spitzen der Borsten. Im Bereich ihrer Spitzen können die Borsten gespleißt sein. Unter einer Hybridbürste ist in diesem Zusammenhang insbesondere eine Bürste, welche sowohl Schaumstoffelemente, als auch Borsten aufweist, zu verstehen.

Die Länge der Borsten kann so bemessen sein, dass sich bei rotierender Bürste ein Radius der rotierenden Bürste von wenigstens 20 Zentimeter, insbesondere wenigstens 30 Zentimeter oder höchstens 40 Zentimeter, insbesondere 50 Zentimeter ergibt.

Die rotierende Bürste kann derart in der Vorrichtung, insbesondere in dem Rahmen, befestigt sein, dass die Rotationsachse eine von dem Zweirad weg gerichtete Pendelbewegung ausführen kann. Dies kann insbesondere dadurch erreicht werden, dass die rotierende Bürste, insbesondere ausschließlich, mit dem oberen Ende ihrer Drehachse mit der Vorrichtung, insbesondere mit dem Rahmen, verbunden ist. Die Pendelbewegung ermöglicht es, dass die rotierende Bürste möglichen Hindernissen, beispielsweise Pedalen eines Fahrrades, durch eine von dem Zweirad weg gerichtete Pendelbewegung ausweicht. Die Verbindung zwischen der rotierenden Bürste und der Vorrichtung, insbesondere dem Rahmen, kann dabei insbesondere durch ein gelenkiges Verbindungselement erfolgen, welches die Pendelbewegung ermöglicht.

Die Vorrichtung, insbesondere die Reinigungseinrichtung kann ein Abweiserelement zum Abweisen der Borsten der rotierenden Bürste aufweisen. Dieses kann auf der vom Zweirad weg weisenden Seite der rotierenden Bürste angeordnet sein. Das Abweiserelement dient insbesondere dazu, die Borsten der rotierenden Bürste abzuweisen, so dass sich die rotierende Bürste in der vom Zweirad weg weisenden Richtung über eine geringere Distanz erstreckt als in der zum Zweirad hinweisenden Richtung. Das Abweiserelement wird bevorzugt mit der Reinigungseinrichtung, insbesondere mit der rotierenden Bürste, entlang der Längsrichtung des Zweirades bewegt. Die Borsten streifen folglich an dem Abweiserelement entlang und werden so an der Entfaltung ihrer möglichen maximalen Erstreckung vom Zweirad weg gehindert. Dies ermöglicht es, die gesamte Vorrichtung schmaler zu gestalten. Insbesondere das Spritzschutzgehäuse kann auf diese Weise schmaler, d.h. mit einer niedrigeren Erstreckung in der Querrichtung des Zweirades, gestaltet werden. Dies verringert die Distanz zwischen einer Bedienperson und dem Zweirad, wenn die Bedienperson über das Spritzschutzgehäuse hinweg greift um das Zweirad zu erreichen. Die Vorrichtung lässt sich so komfortabler bedienen. In Querrichtung kann der Abstand von der Mitte der bestimmungsgemäßen Position des Zweirades zur Außenseite der Vorrichtung höchstens 70 cm, insbesondere höchstens 55 cm, betragen. Dies kann für den Abstand einer oder beider Außenseiten gelten.

Die Vorrichtung kann derart gestaltet und betreibbar sein, dass durch den Einfluss des Abweiserelements auf die Bewegung der Borsten der Bewegungsbereich der Borsten auf der von dem Abweiserelement abgewandten Seite der Bürsten in Richtung eines auf die Rotationsachse der Bürste bezogen axialen Endes der Bürste aufgeweitet wird.

Es hat sich gezeigt, dass es möglich ist, durch ein derart angeordnetes Abweiserelement die Bewegungen der Bürste auf dem von dem Abweiserelement abgewandten Seit derart zu beeinflussen, dass sich eine Aufweitung des Bewegungsbereichs der Borsten zu einem axialen Ende der Bürste hin ergibt. Durch eine geeignete Gestaltung des Abweiserelements und die Wahl geeigneter Betriebsparameter, wie insbesondere die Wahl einer geeigneten Drehzahl sowie geeignete und geeignet bemessene Borsten, lassen sich so mit dem Bewegungsbereich der Borsten Bereiche erreichen, die nach dem Stand der Technik nicht erreichbar waren. Ein wesentlicher Vorteil der Erfindung ist, dass das Abweiserelement die Bewegung der Borsten auf der von dem Abweiserelement abgewandten Seite der rotierenden Bürste beeinflusst. Um mit einer derartigen Vorrichtung ein Reinigungsverfahren durchzuführen, befindet sich das zu reinigende Zweirad in dem Bewegungsbereich der Borsten. Das Abweiserelement zum Abweisen der Borsten befindet sich zumindest teilweise in dem Bewegungsbereich der Borsten auf der von dem Zweirad abgewandten Seite der Bürste. Da sich das Zweirad und das Abweiserelement auf voneinander abgewandten Seiten der rotierenden Bürste befinden, kommt es zu keiner gegenseitigen Behinderung zwischen Abweiserelement und Zweirad.

Besonders signifikant macht sich der Einfluss des Abweiserelements bei einer rotierenden Bürste bemerkbar, deren Rotationsachse, zumindest im Wesentlichen, senkrecht orientiert ist. Bei derartigen Bürsten kann durch das Abweiserelement der Bewegungsbereich der Borsten auf der von dem Abweiserelement abgewandten Seite der Bürste insbesondere in Richtung des oberen axialen Endes der Bürste aufgeweitet werden. Dies ist insbesondere deswegen vorteilhaft, da bei derartig orientierten Bürsten die Borsten aufgrund des kombinierten Einflusses ihrer Fliehkraft und der Schwerkraft nach dem Stand der Technik oftmals eine nach unten weisende Ausrichtung einnehmen. Es hat sich gezeigt, dass mittels eines Abweiserelements diese Borsten dazu gebracht werden können, auf ihrer vom Abweiserelement abgewandten Seite eine schräg nach oben weisende Ausrichtung einzunehmen. Dies ist beispielsweise dann besonders vorteilhaft, wenn es sich um eine Vorrichtung zur Reinigung von Zweirädern handelt. Bei derartigen Vorrichtungen kann so durch den Bewegungsbereich der Bürste ein Bereich direkt unterhalb eines Spritzschutzgehäuses bzw. einer Spritzschutzabdeckung erreicht werden, der sonst nicht durch die Borsten der Bürste erreichbar wäre.

Das Abweiserelement kann eine Oberflächenstruktur aufweisen, mit der die Bewegung der Borsten beeinflusst wird. Die Oberflächenstruktur kann insbesondere derart ausgeprägt sein, dass die Borsten der Bürste beim Entlangstreifen an der Oberflächenstruktur einen Bewegungsimpuls in Richtung des entsprechenden axialen Endes der Bürste erhalten. So kann die Oberflächenstruktur beispielsweise eine diagonal zu der Umfangsrichtung der rotierenden Bürste verlaufende Rippenstruktur aufweisen. Die Oberfläche mit der Oberflächenstruktur kann eine Krümmung aufweisen, so dass sich in Verbindung mit den diagonal verlaufenden Rippen eine Struktur nach Art eines Segments einer Helix ergibt. Ein so gestaltetes Abweiserelement kann insbesondere auch genutzt werden, um die rotierenden Borsten mit Bewegungsimpulsen in Richtung beider Enden der rotierenden Bürste zu beeinflussen, so dass sich auf der von dem Abweiserelement abgewandten Seite der Bewegungsbereich der Borsten in Richtung beider axialer Enden der Bürste aufweitet.

So kann es sich bei dem Abweiserelement beispielsweise um ein Blech handeln. Alternativ und/oder ergänzend ist es möglich, das Abweiserelement aus Kunststoff zu gestalten. Ebenfalls ist eine Kombination verschiedener Werkstoffe möglich. Besonders vorteilhaft ist es, wenn das Abweiserelement zumindest teilweise aus HDPE (high density polyethylene) besteht. Das Abweiserelement kann auch ein Bestandteil eines anderen Elements der Vorrichtung sein. Insbesondere kann das Abweiserelement ein Bestandteil eines Gehäuses, insbesondere eines Spritzschutzgehäuses der Vorrichtung sein.

Es ist möglich, dass das Abweiserelement relativ zu der rotierenden Bürste bewegbar ist. So kann das Abweiserelement insbesondere in oszillierenden Bewegungen bewegt werden. Die Bewegungsrichtung kann insbesondere parallel zur Rotationsachse sein. Hierdurch lassen sich die Einflüsse des Abweiserelements auf die Borsten zeitabhängig verändern. So kann es beispielsweise möglich sein, dass die Borsten der rotierenden Bürste abwechseln jeweils in Richtung einer der beiden Enden der Bürste ausgelenkt werden.

Die Bewegbarkeit des Abweiserelements kann insbesondere dadurch erzielt werden, dass ein elektroaktives Polymer verwendet wird. Dieses verändert seine Form durch das Anlegen einer elektrischen Spannung. Es kann das gesamte Abweiserelement bewegt werden, alternativ und/oder ergänzend ist es ebenfalls möglich, dass lediglich eine Oberflächenstruktur, insbesondere durch Verwendung eines elektroaktiven Polymers, verändert (und somit bewegt) wird. So kann beispielsweise die Orientierung einer diagonal zur Umfangsrichtung der rotierenden Bürste verlaufenden Rippenstruktur durch das Bewegen des Abweiserelements bzw. Verändern von dessen Oberflächenstruktur verändert werden.

Die Bewegung der Reinigungseinrichtung entlang der Längsrichtung des Zweirades kann durch eine Pneumatik bewirkt werden. Dies hat den Vorteil, dass die Kraft, mit der die Reinigungseinrichtung bewegt wird, durch den maximalen Druck der Pneumatik zuverlässig begrenzt wird. Dies erhöht die Betriebssicherheit der Vorrichtung wenn sich Hindernisse, zum Beispiel weit ausragende Teile des Zweirades, im Bewegungsweg der Reinigungseinrichtung befinden. Auch Unfällen, beispielsweise wenn Gliedmaßen von Bedienpersonen in den Bewegungsweg der Reinigungseinrichtung geraten, kann so wirkungsvoll vorgebeugt werden. Alternativ und/oder ergänzend kann die Bewegung der Reinigungseinrichtung durch einen elektrischen Antrieb bewirkt werden.

Alternativ und/oder ergänzend kann die Bewegung der Reinigungseinrichtung entlang der Längsrichtung des Zweirades durch einen Antrieb bewirkt werden, der gleichzeitig die Rotation der Bürste der Reinigungseinrichtung bewirkt. Hierfür wird der Antrieb insbesondere über ein erstes Getriebe mit einem hohen Untersetzungsfaktor, beispielsweise 1:72, mit der Reinigungseinrichtung gekoppelt. Alternativ und/oder ergänzend kann der Antrieb mit der rotierenden Bürste über ein zweites Getriebe gekoppelt sein. Das zweite Getriebe kann beispielsweise einen Untersetzungsfaktor von 1:7 aufweisen. Vorteilhaft ist, wenn der Untersetzungsfaktor des zweiten Getriebes niedriger ist als der Untersetzungsfaktor des ersten Getriebes. Bei dem ersten und/oder dem zweiten Getriebe kann es sich um ein Schneckengetriebe handeln. Auf diese Weise ist es möglich, dass der Antrieb die rotierende Bürste mit einer wesentlich höheren Drehzahl antreibt, als der Drehzahl, die über eine geeignete mechanische Kopplung in die Bewegung der Reinigungseinrichtung entlang der Führungseinrichtung umgesetzt wird. Die Kopplung kann insbesondere unter Nutzung eines Zugmittels zum Bewegen der Reinigungseinrichtung erfolgen.

Es ist insbesondere möglich, dass der Antrieb einen Elektromotor aufweist, dessen Motorwelle mit ihrem einen Ende die Bürste und mit ihrem anderen Ende die Bewegung der Reinigungseinrichtung entlang der Längsrichtung des Zweirades antreibt. Insbesondere sind das erste und das zweite Getriebe an unterschiedlichen Enden der Welle angeordnet.

Die Vorrichtung kann insbesondere einen Drehmomentbegrenzer aufweisen, der das Drehmoment, das zum Bewegen der Reinigungseinrichtung genutzt wird, begrenzt. Dadurch kann verhindert werden, dass bei einer Kollision mit der sich bewegenden Reinigungseinrichtung eine Person verletzt und/oder ein Zweirad beschädigt wird. Der Drehmomentbegrenzer kann insbesondere das Drehmoment, dass zum Bewegen der Reinigungseinrichtung auf die mechanische Kopplung, insbesondere auf das Zugmittel, übertragen wird, auf einen Wert von wenigstens 4,5 Nm und/oder 20 Nm begrenzt.

Insbesondere kann der Antrieb, der die Bewegung der Reinigungseinrichtung entlang der Längsrichtung des Zweirades bewirkt, auch die Raddreheinheit Antreiben. Hierfür kann die Bewegung der Raddreheinheit insbesondere mittels einer gegenseitigen Freilauflagerung mit der Bewegung der Reinigungseinrichtung gekoppelt sein. Hierdurch wird bewirkt, dass die Raddreheinheit das Rad immer in die gleiche Richtung dreht, unabhängig davon, in welche Richtung sich die Reinigungseinrichtung bewegt.

Der Antrieb, insbesondere der Elektromotor kann spritzwassergeschützt sein. Beispielsweise kann der Antrieb, insbesondere der Elektromotor spritzwassergeschützt nach IP65 sein. Dies ermöglicht es, den Antrieb, insbesondere den Elektromotor, der Reinigungsflüssigkeit auszusetzen. Auf diese Weise kann die Reinigungsflüssigkeit zur Kühlung des Antriebs, insbesondere des Elektromotors genutzt werden.

Die Vorrichtung, insbesondere die Steuerungseinrichtung, kann einen Frequenzumrichter zur Versorgung des Elektromotors mit elektrischer Energie aufweisen. Der Frequenzumrichter kann insbesondere für Steuerungsaufgaben genutzt werden.

Die Vorrichtung kann eine Energieführungskette zur Versorgung der Reinigungseinrichtung mit elektrischer Energie und/oder Reinigungsflüssigkeit aufweisen. Eine derartige Energieführungskette zeichnet sich insbesondere dadurch aus, dass ihre Glieder lediglich innerhalb einer Ebene relativ zueinander beweglich sind. Auf diese Weise kann erreicht werden, dass Schläuche und/oder Kabel, die in der Energieführungskette geführt werden, sich nicht unkontrolliert in der Vorrichtung bewegen, sondern während der Bewegung der Reinigungseinrichtung in einem vorgegebenen, räumlich eng begrenzten Bereich, geführt werden. Die Energieführungskette kann so angeordnet sein, dass sie sich in einer horizontalen Ebene bewegt. Auf diese Weise lässt sich die Energieführungskette bevorzugt unmittelbar unterhalb der Oberseite des Spritzschutzgehäuses anordnen. Die Energiekette kann so oberhalb der rotierenden Bürste zur Reinigungseinrichtung geführt sein. Insbesondere kann die Energiekette oberhalb der rotierenden Bürste zu deren Grundkörper geführt sein, um den Antrieb der rotierenden Bürste mit elektrischer Energie zu versorgen. Hierdurch ergibt sich eine Möglichkeit der platzsparenden Unterbringung der Energiekette, die wiederum eine kompakte Bauweise der Vorrichtung begünstigt.

Die Vorrichtung kann ein Abstützelement zum Abstützen der Energieführungskette aufweisen. Das Abstützelement kann sich insbesondere entlang der Längsrichtung erstrecken. Das Abstützelement stützt die Energieführungskette ab und verhindert so, dass diese in einer anderen als der durch die Glieder vorgegebenen Richtung aufgrund ihres Eigengewichtes verbogen wird. Insbesondere kann das Abstützelement zwischen der oberen Führung und der Reinigungseinrichtung angeordnet sein. In diesem Fall kann das Abstützelement zusätzlich eine Schutzfunktion für die obere Führung erfüllen.

Die Vorrichtung kann eine Raddreheinheit aufweisen. Die Raddreheinheit dient dazu, ein Rad des Zweirades in Rotation zu versetzen. Dies ermöglicht es insbesondere, den äußeren Bereich des Rades, insbesondere die Reifen, auf ihrem vollen Umfang in die Reinigungsflüssigkeit eintauchen zu lassen. Insbesondere wird so der gesamte Umfang des äußeren Bereichs des Rades einer Ultraschallreinigung zugänglich gemacht.

Die Raddreheinheit kann eine Mehrzahl Rotationskörper aufweisen, die die Rotationsbewegung eines Antriebs auf das Rad übertragen. Der Antrieb kann innerhalb eines Rotationskörpers angeordnet sein. Die Rotationskörper können über Zugmittel miteinander verbunden sein, so dass die Rotationsbewegung von einem Rotationskörper auf den anderen übertragen wird. Die Rotationskörper können von zumindest im Wesentlichen kreiszylindrischer Gestalt sein. Es können Führungselemente zur seitlichen Führung des Rades an den Rotationskörpern angeordnet sein. Diese sind bevorzugt zueinander beabstandet und können insbesondere aufeinander zuweisende, insbesondere sich verjüngende Führungsflächen aufweisen. Die Führungsflächen können konisch gestaltet sein.

Die Rotationskörper können, insbesondere im Bereich zwischen den Führungselementen, eine Oberflächenstruktur aufweisen. Es hat sich gezeigt, dass eine Strukturierung der Oberfläche ein besonders effizienter Weg ist, ein Gleiten der Räder auf den Rotationskörpern zu verhindern. Ein solches Gleiten hätte schlimmstenfalls zur Folge, dass das Rad nicht gedreht wird. Der mit der Strukturierung der Oberfläche versehene Bereich kann eine Breite von wenigstens 30 mm, insbesondere wenigstens 50 mm, aufweisen.

Die Rotationskörper sind bevorzugt in Längsrichtung des Zweirades hintereinander angeordnet. Eine Raddreheinheit kann wenigstens drei, insbesondere wenigstens vier, hintereinander angeordnete Rotationskörper aufweisen. Es können sämtliche Rotationskörper eine Raddreheinheit über Zugmittel miteinander verbunden sein. Auf diese Weise wird lediglich ein Antrieb für eine Raddreheinheit benötigt. Die Mehrzahl Rotationskörper erlaubt es, zwei Räder mit unterschiedlichem Radstand in der Raddreheinheit aufzunehmen.

Die Rotationskörper der Raddreheinheit können insbesondere so gestaltet und angeordnet sein, dass ihre zum Kontakt mit dem Rad bestimmten Oberflächen in ihrem oberen Scheitelpunkt auf unterschiedlichen Höhen angeordnet sind. Auf diese Weise wird es ermöglicht, unterschiedlich große Zweiräder, beispielsweise für Erwachsene oder Kinder bemessene Zweiräder, in der Vorrichtung aufzunehmen und zu reinigen.

Die Raddreheinheit und/oder eine andere, insbesondere nach Art einer Führungsschiene, gestaltete Aufnahme für einen zu reinigenden Gegenstand kann höhenverstellbar ausgebildet sein. Die Höhenverstellung kann beispielsweise dadurch realisiert werden, dass eine Spindel in einer pendelnden Lagerung vorgesehen ist. Die pendelnde Lagerung befindet sich bevorzugt in einem oberen Bereich der Vorrichtung. Es ist möglich, auf einer Seite des Gegenstands eine Spindel und auf der anderen eine Führung anzuordnen, um ein gleichmäßiges Anheben des Gegenstands im Rahmen der Höhenverstellung sicherzustellen. Das Anheben kann insbesondere dadurch realisiert werden, dass die Raddreheinheit um die Achse eines Rotationskörpers geschwenkt wird.

Es können zwei Raddreheinheiten vorgesehen sein, um Vorderrad und Hinterrad des Zweirades gleichzeitig zu drehen.

Die Vorrichtung kann zur Abscheidung von Schmutzpartikeln aus der Reinigungsflüssigkeit einen Filter und/oder einen Hydrozyklon aufweisen. Insbesondere durch einen Hydrozyklon ist eine vorteilhafte Abscheidung von Schmutzpartikeln aus der Reinigungsflüssigkeit möglich, da ein Hydrozyklon bei einer geringen Druckdifferenz betrieben werden kann und sich im Gegensatz zu einem Filtermaterial nicht mit Schmutzpartikeln zusetzt. Die Vorrichtung, insbesondere der Hydrozyklon, ist bevorzugt derart gestaltet, dass sich eine Trennungskorngröße des Hydrozyklon von wenigstens 1 µm, insbesondere wenigstens 3 µm, und/oder höchstens 10 µm, insbesondere höchstens 7 µm, ergibt.

Die Vorrichtung kann zum Reinigen von zum Reinigen der Gegenstände verwendeter Reinigungsflüssigkeit eine Hydrozyklonanordnung mit einer Mehrzahl Hydrozyklone aufweisen. Die Hydrozyklonanordnung weist insbesondere zwei in Reihe geschaltete Hydrozyklone auf. Die zwei Hydrozyklone sind insbesondere derart verschaltet, dass ein erster Hydrozyklon der Abtrennung grober Partikel dient. Insbesondere dient der erste Hydrozyklon der Abtrennung grober Partikel, die größer sind als 70 µm. Der Hydrozyklon kann durch einen Tank verschlossen sein, in dem sich die abgetrennten groben Partikel sammeln. Der Tank kann ein Ventil aufweisen, welches elektrisch und/oder mechanisch geöffnet werden kann, um die sich im Tank ansammelnden Partikel abzuführen. Die Entleerung über das Ventil erfolgt bevorzugt bei abgeschalteter Pumpe. Der Hydrozyklon ist bevorzugt auf der Saugseite einer Pumpe vorgeschaltet. Der zweite, mit dem ersten Hydrozyklon insbesondere in Reihe geschaltete Hydrozyklon ist bevorzugt mit der Druckseite der Pumpe verbunden. Auf diese Weise verhindert der erste Hydrozyklon, dass besonders große Partikel in die Pumpe eindringen, die durch diese Partikel beschädigt werden könnte. Der zweite Hydrozyklon ist bevorzugt an seinem unteren Ende offen. In der beschriebenen Anordnung reicht eine kleine Öffnung, die einen geringen Flüssigkeitsdurchtritt, beispielsweise ca. 100 ml/Minute erlaubt. Mit dieser Flüssigkeit kann eine weitere Fraktion Partikel aus der Reinigungsflüssigkeit abgeschieden werden. Hierbei handelt es sich insbesondere um Partikel mit einer Größe von wenigstens 1 µm, insbesondere wenigstens 3 µm, und/oder höchstens 10 µm, insbesondere höchstens 7 µm. Im Idealfall kann auf diese Weise ein kontinuierlicher Betrieb ermöglicht werden.

Die Reinigungsflüssigkeit kann ein Flockungsmittel als Inhaltsstoff aufweisen. Derartige Flockungsmittel erleichtern insbesondere die Abtrennung feiner Partikel und dienen zur Enttrübung der Reinigungsflüssigkeit. Bei dem Flockungsmittel kann es sich insbesondere um ein biologisches Flockungsmittel handeln. Es kann sich um ein Flockungsmittel handeln, welches auf fermentiertem Mais als wirksamem Bestandteil basiert.

Die Vorrichtung kann eine Strömungserzeugungseinrichtung zur Erzeugung einer Strömung in der Bodenwanne aufweisen. Die Erzeugung einer Strömung in dem in der Bodenwanne aufgenommenen Vorrat an Reinigungsflüssigkeit hat den Vorteil, dass durch die Strömung eine Sedimentation von Schmutzpartikeln zumindest erschwert, insbesondere verhindert wird. Hierdurch wird verhindert, dass sich ein "Bodensatz" aus Schmutz bei längerem Betrieb der Vorrichtung in der Bodenwanne ansammelt. Zum einen können so Stillstandszeiten aufgrund notweniger Reinigung der Bodenwanne zumindest verringert, insbesondere vermieden werden. Weiterhin wird verhindert, dass es aufgrund sich ansammelnder Verschmutzungen zu Betriebsstörungen kommt.

Die Vorrichtung kann weiterhin eine Umkehrosmose-Einrichtung aufweisen. Diese kann genutzt werden, um einen Spülgang mit destilliertem Wasser zu ermöglichen. Ein derartiger Spülgang ist insbesondere am Ende eines Waschgangs sinnvoll. Bei einem derartigen Spülgang wird eine gewisse Menge Wasser, beispielsweise etwa 20 Liter, in einer bestimmten Zeit, beispielsweise in etwa zwei Minuten, genutzt um das Zweirad zu spülen. Bevorzugt ist eine Steuereinrichtung der Vorrichtung so eingerichtet, dass der Spülgang ohne den Einsatz der rotierenden Bürste, insbesondere ohne den Einsatz jeglicher Bürsten, durchgeführt wird. Dies bedeutet insbesondere, dass das destillierte Wasser lediglich über das Zweirad gesprüht wird.

Bei dem in der Bodenwanne vorgehaltenen Reinigungsflüssigkeitsvorrat kann es sich um eine Reinigungsflüssigkeit handeln, die als wesentlichen Bestandteil entkalktes Wasser enthält. Hierdurch wird die Membran der Umkehrosmose-Einrichtung entlastet. Zur Erzeugung des entkalkten Wassers kann die Vorrichtung eine Entkalkungseinrichtung aufweisen. Die Vorrichtung ist bevorzugt derart gestaltet, dass Frischwasser, welches der Vorrichtung zugeführt wird, zunächst der Entkalkungseinheit zugeführt, dort entkalkt, und dann erst weiteren Bestandteilen der Vorrichtung, insbesondere der Umkehrosmose-Einrichtung, zugeführt wird. Die Steuerungseinrichtung der Umkehrosmose-Einrichtung kann dafür eingerichtet sein, dass die Umkehrosmose während eines überwiegenden Teils des Waschgangs ausgeführt wird, insbesondere während des gesamten Waschgangs ausgeführt wird. Dies ermöglicht es insbesondere, einen Vorrat des mit der Umkehrosmose-Einrichtung erzeugten destillierten Wassers zu erzeugen, der dann im Spülgang eingesetzt wird. Die Vorrichtung weist hierfür bevorzugt einen Tank für das mit der Umkehrosmose-Einrichtung erzeugte Spülwasser auf. Eine derartige Betriebsweise der Vorrichtung ermöglicht es, die Umkehrosmose-Einrichtung kleiner zu dimensionieren als dies nötig wäre, wenn diese lediglich zum Zeitpunkt des Spülvorgangs genutzt würde.

Die Vorrichtung kann einen maximalen Druck, der auf das Zweirad versprühten Reinigungsflüssigkeit aufweisen. Hierunter ist insbesondere der Druck der Reinigungsflüssigkeit unmittelbar vor dem Verlassen des Leitungssystems der Vorrichtung durch etwaige Düsen zum Verteilen der Reinigungsflüssigkeit über das Zweirad zu verstehen. Dieser Druck kann höchstens fünf bar, insbesondere höchstens 3,5 bar, im Idealfall, zumindest in etwa drei bar betragen. Es hat sich gezeigt, dass eine Reinigung der Zweiräder mit einem niedrigeren Druck, als dieser für gewöhnlich für eine gründliche Reinigung eines Zweirades als notwendig angesehen wird, zu einer Schonung potentiell empfindlicher Komponenten des Zweirades führt. Insbesondere bei der Reinigung sogenannter ebikes bzw. Pedelecs können durch die Beschränkung des Maximaldrucks mögliche Beschädigungen, zumindest weitestgehend, vermieden werden.

Es hat sich gezeigt, dass der Durchsatz der Reinigungsflüssigkeit, der während des Waschgangs auf das Zweirad aufgebracht, insbesondere mittels Düsen aufgesprüht, wird wenigstens 40, insbesondere wenigstens 45, und/oder höchstens 130, insbesondere höchstens 110 Liter/Minute betragen kann. Insbesondere kann der Durchsatz 60 bis 100 Liter/Minute betragen. Es hat sich gezeigt, dass sich bei diesen Durchsätzen eine zufriedenstellende Reinigungswirkung, insbesondere auch bei niedrigen Drücken, erreicht werden kann.

Die Vorrichtung kann ein Durchlauferhitzer zum Erhitzen der Reinigungsflüssigkeit aufweisen. Der Durchlauferhitzer kann derart angeordnet sein, dass er die Reinigungsflüssigkeit erhitzt, unmittelbar bevor diese auf das Zweirad gesprüht wird. Hierunter ist insbesondere zu verstehen, dass lediglich der Teil der Reinigungsflüssigkeit in der Vorrichtung, der während einem Waschgang auf das Zweirad gesprüht wird, erhitzt wird. Auf diese Weise wird ein energiesparender Betrieb gewährleistet, da nicht zunächst der gesamte Reinigungsflüssigkeitsvorrat erhitzt werden muss, sondern nur der Teil, der tatsächlich auf das Zweirad gesprüht wird.

Die Vorrichtung weist insbesondere eine rotierende Reinigungsdüse zum Verteilen der Reinigungsflüssigkeit über das Zweirad auf. Die rotierende Reinigungsdüse kann insbesondere derart gestaltet sein, dass sei ein rotierendes Element aufweist, welches um eine Rotationsachse rotiert und an dem wenigstens eine, bevorzugt wenigstens zwei, Austrittsöffnungen für die Reinigungsflüssigkeit voneinander und/oder von der Rotationsachse beabstandet angeordnet sind. Die rotierende Reinigungsdüse ist insbesondere so gestaltet, dass die Rotationsbewegung des rotierenden Elements der rotierenden Reinigungsdüse durch das austretende Wasser bewirkt wird. Hierdurch kann es im Idealfall möglich sein, die Rotationsbewegung der rotierenden Reinigungsdüse ohne weitere Hilfsenergie zu ermöglichen, was den Aufbau der Vorrichtung vereinfacht und insbesondere die Menge der stromführenden Leitungen in dem der Reinigungsflüssigkeit ausgesetzten Bereich der Vorrichtung reduziert. Gleichzeitig ermöglicht die Rotationsbewegung der rotierenden Reinigungsdüse eine wesentlich bessere Verteilung der auf das Zweirad gesprühten Reinigungsflüssigkeit.

Die Außenhaut des Spritzschutzgehäuses kann, zumindest im Wesentlichen, aus Metall, insbesondere aus einem rostfreien Stahl, und/oder, zumindest im Wesentlichen aus Kunststoff gefertigt sein. Das Gehäuse kann eine, zumindest im Wesentlichen, quaderförmige Form aufweisen. Unter einer zumindest im Wesentlichen quaderförmigen Form ist insbesondere zu verstehen, dass Eckbereiche des Gehäuses abgerundet sein können. Derartige Abrundungen dienen insbesondere der Verbesserung des ästhetischen Erscheinungsbildes der Vorrichtung.

Das Gehäuse kann zwei Längsseiten aufweisen, die vorzugsweise parallel zur Längsrichtung des in der Vorrichtung aufgenommenen Zweirades orientiert sind. Die Längsseiten des Spritzschutzgehäuses können verschließbare Öffnungen aufweisen. Die verschließbaren Öffnungen sind insbesondere durch Schiebetüren verschlossen. Eine entsprechende verschließbare Öffnung kann auf einer und/oder beiden Längsseiten des Spritzschutzgehäuses vorgesehen sein. Die verschließbaren Öffnungen dienen insbesondere dazu, eine manuelle Reinigung, beispielsweise als Vorreinigung, des Zweirades zu ermöglichen. Darüber hinaus ermöglichen sie den Zugang ins Innere der Vorrichtung, beispielsweise zu Wartungszwecken.

Die Querseiten des Gehäuses sind, zumindest im Wesentlichen, vertikal und/oder, zumindest im Wesentlichen, parallel zur Querrichtung des zu reinigenden Zweirades orientiert. Eine verschließbare Öffnung zur Aufnahme des Zweirades in die Vorrichtung kann im Bereich einer Querseite des Spritzschutzgehäuses angeordnet sein. Die Anordnung dieser Öffnung im Bereich der Querseite hat den Vorteil, dass das Zweirad in einer geradlinigen Bewegung parallel zu dessen Längsrichtung in die Vorrichtung eingebracht und in seiner bestimmungsgemäßen Position innerhalb der Vorrichtung positioniert, in der es anschließend gereinigt wird.

Die Vorrichtung kann eine Innenbeleuchtung aufweisen. Die Innenbeleuchtung kann derart angesteuert sein, dass die Farbe der Innenbeleuchtung in Abhängigkeit von Betriebszuständen der Vorrichtung wechselt. Es kann sich um eine LED-Innenbeleuchtung handeln. Insbesondere in Zusammenhang mit der Innenbeleuchtung können Teile des Spritzschutzgehäuses, insbesondere Elemente zum verschließen verschließbare Öffnungen des in den Gehäuses, wie beispielsweise Schiebetüren an den Längsseiten der Vorrichtung, transparent gestaltet sein.

Die Steuerungseinrichtung der Vorrichtung kann ebenfalls im Bereich einer Querseite der Vorrichtung angeordnet sein. Insbesondere ist es möglich, die Steuereinrichtung und die verschließbare Öffnung zum Einführen des Zweirades in die Vorrichtung im Bereich gegenüberliegender Querseiten des Spritzschutzgehäuses anzuordnen. Hierdurch ergibt sich die Möglichkeit, den Raumbereich der Vorrichtung, in dem das Zweirad aufgenommen und der Reinigungsflüssigkeit ausgesetzt wird, besonders zuverlässig von dem Teil der Vorrichtung im Bereich einer Querseite, in dem die Steuereinrichtung mit ihrer Elektrik angeordnet wird, zu trennen. Dies erhöht die Betriebssicherheit.

Die Vorrichtung, insbesondere die Steuerungseinrichtung der Vorrichtung, kann ein Bezahlsystem aufweisen. Das Bezahlsystem kann für Zahlungen mit Bargeld und/oder einem bargeldlosen Zahlungsmittel ausgebildet sein.

Die Vorrichtung, insbesondere die Steuerungseinrichtung der Vorrichtung, kann dazu eingerichtet sein, die Bürste abwechselnd in unterschiedliche Richtungen rotieren zu lassen. Hierdurch wird eine bessere Reinigung des Gegenstands ermöglicht.

Die Vorrichtung kann ein Trennelement, insbesondere ein Trennblech, zum Trennen eines Nassbereichs von einem Trockenbereich aufweisen. Die Vorrichtung ist derart gestaltet, dass das Trennelement von oben in ein sich insbesondere in einer Bodenwanne der Vorrichtung sammelndes Flüssigkeitsreservoir hineinragt. Die von den rotierenden Bürsten abgewandte Seite des Trennelements wird somit effizient vor Spritzwasser geschützt. Auf dieser von den Bürsten abgewandten Seite ist insbesondere die Steuerungseinrichtung der Vorrichtung, insbesondere oberhalb der Oberfläche des Flüssigkeitsreservoirs, in die das Trennelement hineinragt, angeordnet. Auf dieser von den rotierenden Bürsten abgewandten Seite werden insbesondere auch die elektrischen Leitungen, die unterhalb des Flüssigkeitsspiegels verlegt sind, aus der Flüssigkeit hinaus zu der Steuerungseinrichtung geführt.

Die verschließbare Öffnung im Bereich einer Querseite kann durch eine verschließbare Tür verschließbar sein. Diese kann bevorzugt randseitig über Spritzschutzelemente, insbesondere in Gestalt von Borsten, verfügen. Es hat sich gezeigt, dass mit derartigen Spritzschutzelementen bereits eine wirksame Abdichtung des Spritzschutzgehäuses gegenüber austretender Reinigungsflüssigkeit erzielt werden kann. Die verschließbare Öffnung kann eine Breite von mindestens 470 mm, bevorzugt mindestens 520 mm, aufweisen. Es hat sich gezeigt, dass bei einer Öffnung von dieser Breite die Pedale marktüblicher Fahrräder die Öffnung ungehindert passieren können.

Die Vorrichtung kann im Bereich der Stirnseite eine herunterklappbare Rampe aufweisen. Diese dient dazu, das Zweirad in die Vorrichtung einzubringen. Die Rampe kann ein Führungselement zur seitlichen Führung des Zweirades beim Einbringen in die Vorrichtung aufweisen. Ein solches Führungselement erleichtert es, das Zweirad in einer geradlinigen Bewegung in seine bestimmungsgemäße Position innerhalb der Vorrichtung zu bringen. Die herunterklappbare Rampe kann über Dämpfungselemente zur Dämpfung der Bewegung beim Herunterklappen der Rampe verfügen. Diese dient insbesondere dazu, Bedienpersonen vor Verletzungen durch die herunterklappende Rampe zu schützen. Bei dem Dämpfungselement kann es sich um einen Tellerdämpfer handeln. Tellerdämpfer sind besonders raumsparend, da sie lediglich im Bereich der Anlenkung der Rampe an dem Spritzschutzgehäuse angeordnet sein müssen. Die Rampe kann eine Öffnung zum Ablaufen von Flüssigkeit aufweisen. Unter der Rampe kann ein Gefäß zum Auffangen dieser Flüssigkeit angeordnet sein. Hierdurch kann verhindert werden, dass Reinigungsflüssigkeit, die noch an dem Zweirad anhaftet, beim entnehmen des Zweirades aus der Vorrichtung zunächst auf die Rampe und anschließend in die Umgebung der Vorrichtung gelangt.

Die Rampe kann insbesondere als Auffangwanne für Reinigungsflüssigkeit ausgebildet sein. Hierdurch kann verhindert werden, dass Reinigungsflüssigkeit, die noch an dem Zweirad anhaftet, beim Entnehmen des Zweirades aus der Vorrichtung zunächst auf die Rampe, und anschließend in die Umgebung der Vorrichtung gelangt.

Die verschließbare Öffnung in der Längsseite und/oder der Querseite des Spritzschutzgehäuses kann einen Sicherheitskontakt bzw. einen Sicherheitsschalter aufweisen. Die Steuereinrichtung ist bevorzugt dazu eingerichtet, den Betrieb der Vorrichtung nur dann zu ermöglichen, wenn über den Sicherheitskontakt bzw. den Sicherheitsschalter sichergestellt ist, dass die verschließbare Öffnung geschlossen ist. Insbesondere können alle verschließbaren Öffnungen der Vorrichtung einen entsprechenden Sicherheitsschalter bzw. Sicherheitskontakt aufweisen.

Das Spritzschutzgehäuse kann eine Gesamtabmessung von wenigstens 1,6 m, insbesondere wenigstens 2,2 m und/oder höchstens 3,0 m, insbesondere höchstens 2,6m, in Längsrichtung aufweisen.

Das Spritzschutzgehäuse kann eine Gesamtabmessung von wenigstens 0,85 m, insbesondere wenigstens 0,9 m und/oder höchstens 1,65 m, insbesondere höchstens 1,2 m, in Querrichtung aufweisen.

Das Spritzschutzgehäuse kann eine Gesamtabmessung von wenigstens 0,9 m, insbesondere wenigstens 1,0 m und/oder höchstens 1,58 m, insbesondere höchstens 1,2 m in Höhenrichtung aufweisen.

Bei diesen Abmessungen bietet die Vorrichtung eine besonders gute Kombination aus kompakter Bauweise und damit leichte Bedien- und/oder Transportierbarkeit. Gleichzeitig können Zweiräder in vielen unterschiedlichen Baugrößen in der Vorrichtung aufgenommen und gereinigt werden.

Das Spritzschutzgehäuse kann an seiner Oberseite eine verschließbare Öffnung aufweisen. Die verschließbare Öffnung an der Oberseite erleichtert das Einführen des Zweirades in die Vorrichtung. Insbesondere ist die verschließbare Öffnung an der Oberseite des Spritzschutzgehäuses derart gestaltet, dass der Lenker und/oder der Sattel des Zweirades auch bei geschlossener Öffnung aus dem Spritzschutzgehäuse hervortreten können. Hierzu kann die verschließbare Öffnung eine Mehrzahl Verschlusselemente aufweisen. Die Verschlusselemente verfügen bevorzugt über Dichtelemente, welche jene Bestandteile des Zweirades, die die aus dem Spritzschutzgehäuse hervortretenden Teile des Zweirades mit dem Rest des Zweirades verbinden, derart umschließen können, dass sich ein wirksamer Spritzschutz ergibt. Bei diesen Dichtelementen kann es sich beispielsweise um Bürsten handeln. Diese können eine Borstenlänge von höchstens 35 Zentimeter, insbesondere höchstens 25 cm, und/oder wenigstens fünf Zentimeter, insbesondere wenigstens 15 Zentimeter, aufweisen. Es hat sich gezeigt, dass Borsten in diesem Längenbereich gut geeignet sind, um einen wirksamen Spritzschutz herbeizuführen. Derartige Borsten sind lang genug, um bei unterschiedlich gestalteten Zweirädern die entsprechenden Teile zu umschließen. Andererseits sind diese Borsten nicht derart lang, dass sie sich zwingend unter ihrem Eigengewicht unverhältnismäßig verbiegen und dadurch die Spritzschutzabdichtung gefährden.

Um das Austreten von Reinigungsflüssigkeit aus dem Spritzschutzgehäuse, insbesondere im Bereich von Gehäuseteilungen, also Bereichen, in denen unterschiedliche Teile des Spritzschutzgehäuses aneinanderstoßen, Flüssigkeitsleitelemente zum Ableiten von Flüssigkeit, insbesondere in Richtung der Bodenwanne, aufweisen. Die Flüssigkeitsleitelemente sind derart gestaltet, dass sie aus dem Spritzschutzgehäuse hervortreten und ein, insbesondere stetiges, Gefälle zum Inneren der Vorrichtung hin, insbesondere zur Bodenwanne hin, aufweisen. Der aus dem Spritzschutzgehäuse hervortretende Teil des Flüssigkeitsleitelementes kann insbesondere nach Art einer Regenrinne gestaltet sein. Auf diese Weise kann Spritzwasser, das an den oberhalb des Flüssigkeitsleitelementes angeordneten Gehäuseteilen abläuft, aufgefangen und ins Gehäuseinnere, insbesondere in die Bodenwanne, geleitet werden. Ein derartiges Flüssigkeitsleitelement kann insbesondere unterhalb der verschließbaren Öffnungen der Vorrichtung angeordnet sein. Auf diese Weise wird die Umgebung der Vorrichtung wirksam vor austretender Reinigungsflüssigkeit geschützt, ohne dass ein übertriebener Aufwand zur Abdichtung des Spritzschutzgehäuses betrieben werden muss.

Die Vorrichtung kann eine Fixiereinrichtung zur Fixierung des Zweirades in seiner bestimmungsgemäßen Position, insbesondere während der Durchführung des Reinigungsvorgangs, aufweisen. Die Fixiereinrichtung kann insbesondere an einem aus der Vorrichtung hervortretenden Teil des Zweirades, insbesondere dem Lenker und/oder dem Sattel, angreifen. Die Fixiereinrichtung kann so gestaltet sein, dass sie das entsprechende Teil des Zweirades mechanisch mit der Vorrichtung, insbesondere mit dem Spritzschutzgehäuse, verbindet.

Die Vorrichtung kann eine Einführvorrichtung zum Bewirken und/oder Unterstützen des Einführens des Zweirades in die Vorrichtung aufweisen. Bei dieser kann es sich insbesondere um ein entlang einer Führung bewegbares Förderelement handeln, welches dazu ausgebildet ist, an dem Zweirad, insbesondere an einem während der Reinigung des Zweirades aus der Vorrichtung hervortretenden Teils des Zweirades wie Lenker und/oder Sattel, anzugreifen, um eine Kraft auf das Zweirad auszuüben, die dessen Bewegung in seine bestimmungsgemäße Position in der Vorrichtung unterstützt und/oder bewirkt. Alternativ und/oder ergänzend kann die Einführeinrichtung dazu geeignet und bestimmt sein, das Zweirad aus der Vorrichtung heraus zu befördern. Führung und/oder Förderelement können außerhalb des Spritzschutzgehäuses, insbesondere auf dessen Oberseite, angeordnet sein. Eine solche Einführeinrichtung erleichtert die Bedienung der Vorrichtung, insbesondere bei schweren Zweirädern, erheblich.

Weiterhin kann die Vorrichtung modular gestaltet sein. Dies betrifft insbesondere die Möglichkeit, dass eine Reinigungseinrichtung mit rotierender Bürste und/oder zwei Reinigungseinrichtungen mit rotierender Bürste zur gleichzeitigen Reinigung jeder Längsseite des Zweirades vorgesehen sind. Eine Vorrichtung mit je einer rotierenden Bürste auf jeder Längsseite des Zweirades hat den Vorteil, dass eine vollständige Reinigung des Zweirades möglich ist, ohne dass die Position des Zweirades während dieser Reinigung verändert werden muss. Eine Vorrichtung mit einer rotierenden Bürste ist kompakter und kostengünstiger zu realisieren. Eine derartige Vorrichtung kann eine Reinigung beider Seiten des Zweirades mit der rotierenden Bürste ermöglichen, in dem das Zweirad zunächst in einer Richtung in die Vorrichtung eingeführt wird, dann ein Reinigungsvorgang durchgeführt wird, bei dem die rotierenden Bürste an der ersten Längsseite des Zweirades angreift, das Zweirad aus der Vorrichtung entnommen und in umgekehrter Richtung wieder in die Vorrichtung eingeführt wird, um dann einen weiteren Reinigungsvorgang durchzuführen, bei dem die zweite Längsseite des Zweirades mit der rotierenden Bürste gereinigt wird. In diesem Fall ist es möglich, auf der von der rotierenden Bürste abgewandten Seite des Zweirades eine Reinigungseinrichtung vorzusehen, welche keine rotierende Bürste aufweist. Diese kann beispielsweise eine Düse, eine rotierende Reinigungsdüse der vorstehend beschriebenen Art und/oder eine feststehende Bürste aufweisen.

Die modulare Gestaltung kann insbesondere bedeuten, dass die Vorrichtung eine zentrale Baugruppe, die insbesondere die Bodenwanne, die Batterieeinheit und/oder die Steuerungseinrichtung aufweist, sowie 2 seitliche Baugruppen, jeweils eine Reinigungseinrichtung aufweisen, aufweist. Die seitlichen Baugruppen sind insbesondere abnehmbar gestaltet. Das Spritzschutzgehäuse kann hierfür entsprechende Gehäuseteilungen aufweisen. Dies ermöglicht es, durch das abnehmen der seitlichen Baugruppen die Breite der Vorrichtung. Hierdurch kann der Transport, beispielsweise durch Türen, vereinfacht oder sogar erst ermöglicht werden.

Um den Transport der Vorrichtung zu ermöglichen oder zumindest zu vereinfachen, kann diese Rollen bzw. Räder aufweisen. Diese können, beispielsweise durch ein Gewinde, ein- und ausfahrbar gestaltet sein. Hierdurch kann wahlweise eine leichte Transportierbarkeit oder ein sicherer Stand der Vorrichtung auf ihrer Unterseite ermöglicht werden. Besonders vorteilhaft ist es, wenn die Rollen und/oder Räder der Vorrichtung innerhalb des Spritzschutzgehäuses angeordnet sind und der Zugang zu den Rollen und/oder Rädern durch geeignete Sicherheitsmaßnahmen, wie beispielsweise Schlösser, gegen einen unbefugten Zugang abgesichert ist, um ein unbefugtes Ausfahren der Räder bzw. Rollen zu verhindern. Die Vorrichtung sichert sich dann, wenn die Räder bzw. Rollen eingefahren sind, durch ihr Eigengewicht gegen einen möglichen Diebstahl. Die Vorrichtung kann insbesondere wenigstens sechs Räder bzw. Rollen aufweisen. Hiervon können zwei Rollen in Längserstreckung der Vorrichtung betrachtet im mittleren Bereich der Vorrichtung angeordnet sein. Dies ist hilfreich, wenn die Vorrichtung beispielsweise über Rampen bewegt werden muss, da hierdurch die Bodenfreiheit beim Passieren des Knickes der Rampe erhöht wird. Hierbei können lediglich die im Bereich einer Querseite der Vorrichtung angeordneten Rollen lenkbar ausgeführt sein, bei den übrigen Rädern bzw. Rollen kann es sich um starre, sogenannte Bockrollen, handeln.

Weitere praktische Ausführungsformen und Vorteile der Erfindung sind nachfolgend im Zusammenhang mit den Zeichnungen beschrieben. Es zeigen:
- Fig. 1: eine perspektivische Darstellung einer beispielhaften Vorrichtung zur Reinigung von Zweirädern,
- Fig. 2: eine perspektivische Darstellung der beispielhaften Vorrichtung zur Reinigung von Zweirädern aus einer anderen Perspektive,
- Fig. 3: eine perspektivische Darstellung eines Teils des inneren der beispielhaften Vorrichtung,
- Fig. 4: eine perspektivische Darstellung der beispielhaften Vorrichtung ohne Gehäuse,
- Fig. 5: eine schematische Darstellung der Reinigungseinrichtung der beispielhaften Vorrichtung.

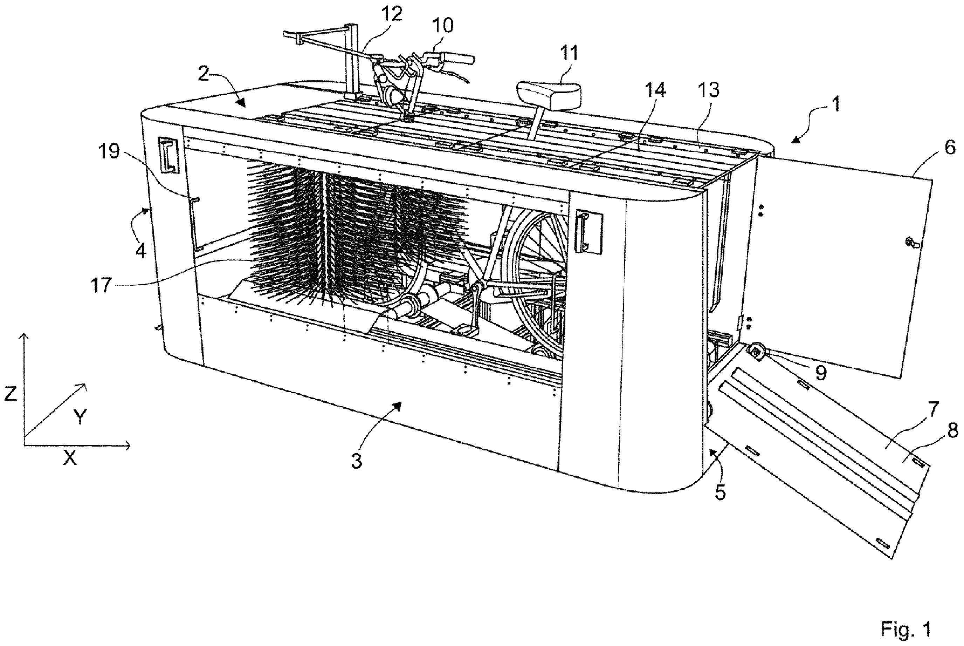

Figur 1 zeigt eine beispielhafte Vorrichtung 1 zur Reinigung von Zweirädern. Das Spritzschutzgehäuse ist im Wesentlichen quaderförmig gestaltet, wobei die Ecken abgerundet sind. Es weist eine Oberseite 2, zwei Längsseiten 3, eine erste Querseite 4 und eine zweite Querseite 5 auf. Im Bereich der ersten Querseite 4 kann die Steuerungseinrichtung angeordnet sein (nicht dargestellt). Weiterhin können im Bereich der ersten Querseite 4 ein Reinigungsflüssigkeitstank, ein Hydrozyklon und/oder ein Filter angeordnet sein. Im Bereich der zweiten Querseite 5 können wie in dem gezeigten Beispiel eine durch eine Tür 6 verschließbare Öffnung und eine herunterklappbare Rampe 7 angeordnet sein. Die Rampe 7 kann Tellerdämpfer 9 zur Dämpfung der Bewegung der Rampe 7 beim Herunterklappen sowie ein Führungselement 8 zur Führung des Zweirades beim Einführen des Zweirades in die Vorrichtung 1 aufweisen. Das Zweirad kann so in einer geradlinigen Bewegung über die Rampe 7 durch die Öffnung in seine bestimmungsgemäße Position, in der es in Figur 1 dargestellt ist, gebracht werden. Tür 6 und Rampe 7 sind im gezeigten Beispiel derart angeordnet, dass die Tür 6 die Öffnung zum Inneren der Vorrichtung 1 hin verschließt, während die herunterklappbare Rampe 7 in ihrer hochgeklappten Stellung einen Teil der Außenoberfläche der Vorrichtung 1 bildet.

Das Zweirad, im dargestellten Beispiel ein Fahrrad, tritt im gezeigten Beispiel während seiner Reinigung mit dem Lenker 10 und dem Sattel aus der Vorrichtung 1 hervor. Im gezeigten Beispiel weist die Vorrichtung eine an dem Lenker 10 angreifende Fixiereinrichtung 12 zum Fixieren des Zweirades in seiner bestimmungsgemäßen Position auf.

Im Bereich der Oberseite 2 kann die Vorrichtung wie in Figur 1 beispielhaft dargestellt an seiner Oberseite 2 eine verschließbare Öffnung aufweisen. Diese erstreckt sich insbesondere von der verschließbaren Öffnung an der zweiten Querseite 5 über den größten Teil des zur Aufnahme des Zweirades bestimmten Raums in der Vorrichtung 1 in Richtung deren erster Querseite 4. Die verschließbare Öffnung weist eine Mehrzahl Verschlusselemente 13 auf. Diese können wie im gezeigten Beispiel als klappbare Elemente ausgeführt sein. Im gezeigten Beispiel sind exemplarisch acht Verschlusselemente 13 dargestellt, von denen jeweils vier auf jeder Längsseite des Zweirades an der Oberseite 2 des Spritzschutzgehäuses angelenkt sind. Die Verschlusselemente 13 weisen Dichtelemente 14 an ihren im geschlossenen Zustand zum Zweirad hinweisenden Kanten auf. Die Dichtelemente 14 können als Bürsten gestaltet sein. Die Dichtelemente 14 können die Bereiche des Zweirades, die den aus der Vorrichtung 1 herausragenden Lenker und den aus der Vorrichtung 1 herausragenden Sattel 10 mit dem Rest des Zweirades, der in der Vorrichtung 1 aufgenommen ist, verbinden, derart umschließen, dass sich ein wirksamer Spritzschutz ergibt. Hierbei passen sich die Borsten selbsttätig an die Kontur des jeweiligen zu umschließenden Bereiches des Zweirades an.

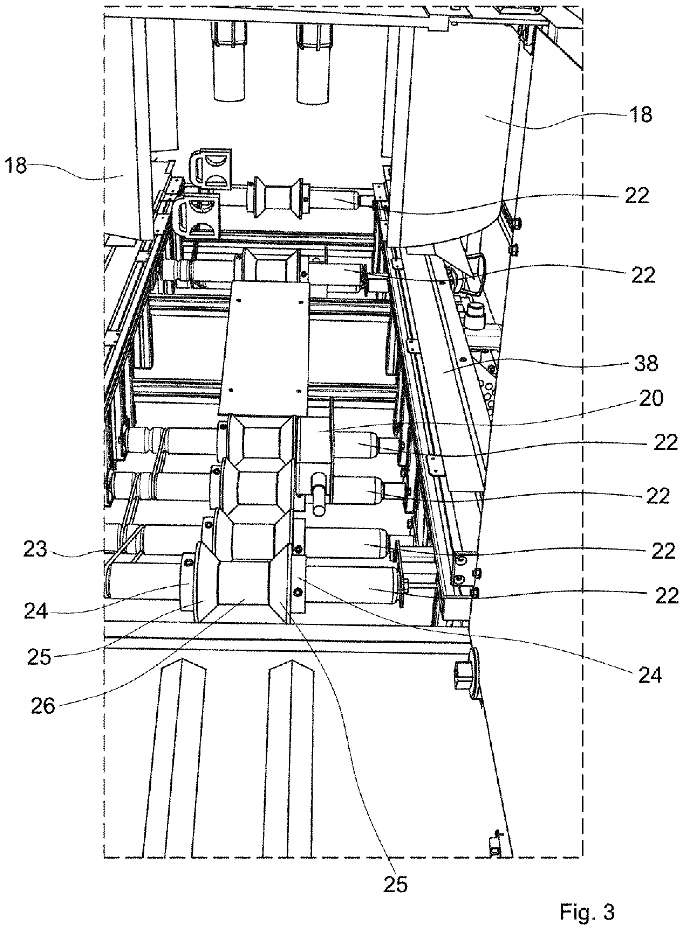

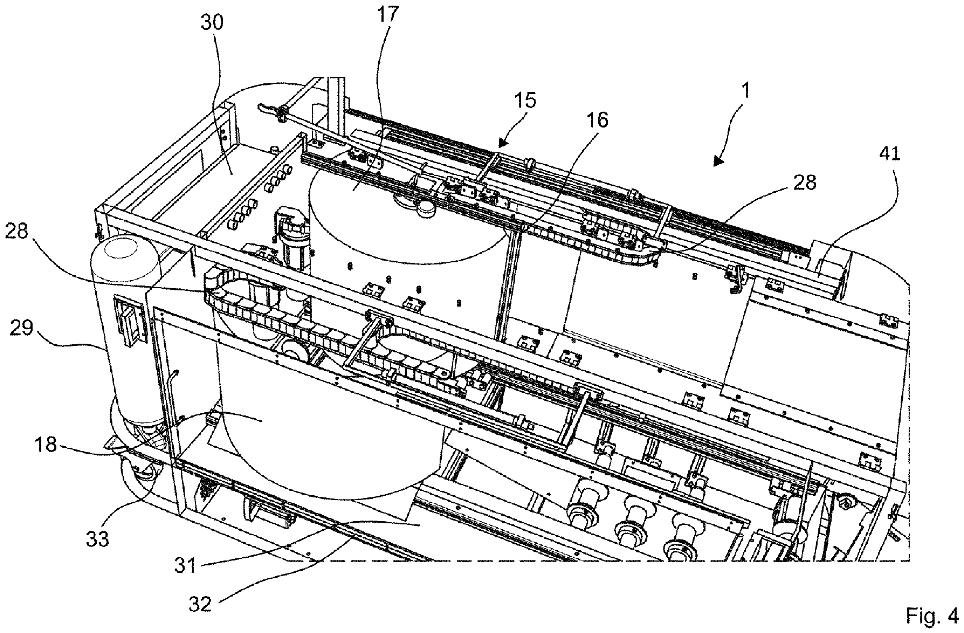

Die beispielhaft dargestellte Vorrichtung weist zwei entlang der Längsrichtung X des Zweirades verfahrbare Reinigungseinrichtungen 15 auf. Jede der Reinigungseinrichtungen 15 verfügt über eine in dem gezeigten Beispiel in einem Rahmen 16 aufgenommene rotierende Bürste 17. Die rotierenden Bürsten sind lediglich in Figur 1 zeichnerisch dargestellt. In Figur 4 findet sich eine schematische Darstellung, bei der die Erstreckung der rotierenden Bürste im rotierenden Zustand, wenn die Borsten durch die Fliehkraft stabilisiert sind, durch einen Kreiszylinder dargestellt ist. In den anderen Abbildungen sind die rotierenden Bürsten 17 zugunsten der besseren Sichtbarkeit anderer Elemente der Vorrichtung 1 nicht dargestellt. An dem Rahmen 16 der Reinigungseinrichtung können beispielsweise Düsen zum Verteilen der Reinigungsflüssigkeit auf dem Zweirad angebracht sein. Weiterhin kann ein Abweiserelement 18, welches die Entfaltung der Borsten der rotierenden Bürste 17 in vom Zweirad wegweisender Richtung begrenzt, an der Reinigungseinrichtung 15 angebracht sein. In Figur 1 sind diese zugunsten einer besseren Sicht auf die rotierenden Bürsten 17 nicht dargestellt. Insbesondere in Figur 3 ist ein beispielhaftes Abweiserelement 18 in Gestalt eines gebogenen Bleches zu sehen.

Im Bereich der Längsseiten 3 weist die in Figur 1 beispielhaft dargestellte Vorrichtung 1 durch Schiebetüren 19 verschließbare Öffnungen auf.

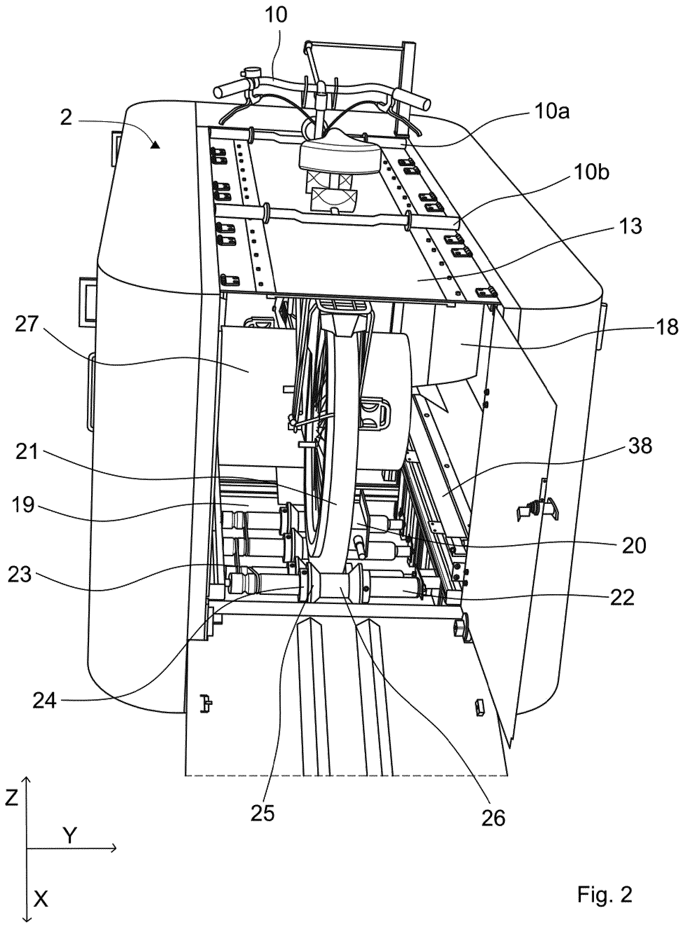

In Figur 2 ist die beispielhafte Vorrichtung 1 aus einer anderen Perspektive dargestellt. Die Verschlusselemente 13 sind lediglich schematisch dargestellt, jedoch verdeutlichen zusätzlich dargestellte Fahrradlenker 10a, 10b die flexible Nutzungsmöglichkeit der Vorrichtung 1 für unterschiedlich gestaltete Zweiräder. So ist der beispielhaft dargestellte alternative Lenker 10 niedriger als der bereits in Figur 1 dargestellte beispielhafte Zweiradlenker 10. Dennoch kann das Zweirad aufgrund der niedrigen Höhe der Oberseite 2 der Vorrichtung in diese aufgenommen werden. Darüber hinaus besteht die Möglichkeit, das Zweirad in umgekehrter Richtung in die Vorrichtung 1 einzubringen. Der Lenker würde sich dann in etwa in der durch den beispielhaften Lenker 10b kenntlich gemachten Position oberhalb der Oberseite 2 der Vorrichtung 1 befinden.

Weiterhin ist in Fig. 2 die Bodenwanne der Vorrichtung 1 gut erkennbar. In dieser befindet sich während des Betriebs der Vorrichtung 1 einen Vorrat von Reinigungsflüssigkeit. Ebenfalls erkennbar ist ein beispielhafter Ultraschallgenerator 20. Die Vorrichtung 1 kann einen derartigen Ultraschallgenerator 20 insbesondere zur Reinigung eines Reifens 21 des Zweirades aufweisen.

Die Vorrichtung kann - wie dargestellt - eine Raddreheinheit aufweisen. Diese kann, wie im gezeigten Beispiel, eine Mehrzahl kreiszylindrischer Rotationskörper 22 aufweisen. Die Rotationskörper 23 können durch ein Zugmittel 23 verbunden sein. Wie im Beispiel gezeigt, können die Rotationskörper 23 in unterschiedlichen Höhen angeordnet sein, um unterschiedlich große Zweiräder in geeigneter Weise abstützen und deren Räder drehen zu können. Die Rotationskörper 23 Führungselemente 24 aufweisen. Die Führungselemente 24 können Führungsflächen 25 aufweisen, die wie im gezeigten Beispiel aufeinander zuweisen. Der zur Abstützung des Rades bestimmte Bereich 26 des Rotationskörpers 23 kann eine strukturierte Oberfläche zur Verbesserung der Reibung des Reifens 21 auf der Oberfläche des Rotationskörpers 23 aufweisen.

In Fig. 2 beispielhaft dargestellt ist eine weitere rotierende Bürste 27. Die Rotationsachse dieser weiteren rotierenden Bürste 27 ist, zumindest im Wesentlichen, parallel zur Querrichtung Y des Zweirads orientiert. Diese weitere rotierende Bürste 27 ermöglicht insbesondere die Reinigung des Kettenblattes und der Kette des Zweirades.

Fig. 3 zeigt einen vergrößerten Ausschnitt einer Vorrichtung 1 ohne ein darin aufgenommenes Zweirad. Insbesondere ist in dieser Darstellung erkennbar, dass die beispielhafte Vorrichtung 1 zwei Raddreheinheiten, jeweils eine für das Vorderrad und das Hinterrad des Zweirades, aufweist. Jede der Raddreheinheiten kann wie im gezeigten Beispiel eine Mehrzahl Rotationskörper 22 aufweisen.

In der perspektivischen Darstellung in Fig. 4 ist das Spritzschutzgehäuse zur besseren Sichtbarkeit anderer Elemente der Vorrichtung 1 nicht dargestellt.

In Fig. 4 ist sichtbar, dass jede Reinigungseinrichtung 15 durch eine Energieführungskette 28 mit Reinigungsflüssigkeit und elektrischer Energie versorgt werden kann. Insbesondere können die Energieführungskette 28 wie im gezeigten Beispiel in einer horizontalen Ebene verlaufen, dies heißt insbesondere, dass die durch die Glieder der Energieführungskette 28 vorgegebene Krümmungsebene der Energieführungskette 28 horizontal oder zumindest im Wesentlichen horizontal verläuft. Die Vorrichtung kann ferner wie im gezeigten Beispiel ein Abstützelement 41 zum Abstützen der Energieführungskette aufweisen. Dieses kann wie im gezeigten Beispiel zwischen der Reinigungseinrichtung 15 und der oberen Führung 40 angeordnet sein, um so die obere Führung 40 vor Reinigungsflüssigkeit zu schützen.

Weiterhin sichtbar in Fig. 4 ist ein beispielhafter Tank 29 für Reinigungsflüssigkeit. Dieser ist, wie die ebenfalls sichtbare beispielhafte Steuerungseinrichtung 30 im Bereich der ersten Querseite 4 angeordnet.

Ebenfalls sichtbar ist ein beispielhaftes Flüssigkeitsleitelement 31.dieses verbindet das in Fig. 4 nicht dargestellte Spritzschutzgehäuse mit der Bodenwanne 19. Eine Kante 32 des Flüssigkeitsleitelementes 31 ist nach oben gebogen und tritt aus dem Spritzschutzgehäuse hervor. Hierdurch wird bewirkt, dass Spritzwasser bzw. Reinigungsflüssigkeit, die an dem Spritzschutzgehäuse herab läuft in die Bodenwanne 19 abgeleitet wird. Das Flüssigkeitsleitelement 31, welches im gezeigten Beispiel als entsprechend gebogenes Blech ausgestaltet ist, weist hierfür ein stetiges Gefälle hin zur Bodenwanne 19 auf. Die aus dem Spritzschutzgehäuse hervortretende Kante 32 bildet so eine Art außen am Spritzschutzgehäuse angeordnete "Regenrinne".

Ebenfalls kann die Vorrichtung 1 Räder 33 aufweisen. Diese können wie im gezeigten Beispiel so gestaltet sein, dass sie ein- und ausgefahren werden können. Im eingefahrenen Zustand treten die Räder 33 nicht aus der Vorrichtung 1 hervor, sodass diese auf ihrer Unterseite ruht. Auf diese Weise ist ein sicherer Stand gewährleistet. In ihrem ausgefahrenen Zustand treten die Räder 33 aus der Vorrichtung 1 hervor, sodass das Gewicht der Vorrichtung 1 auf den Rädern liegt. In diesem Zustand lässt sich die Vorrichtung 1 leicht verschieben und somit transportieren.

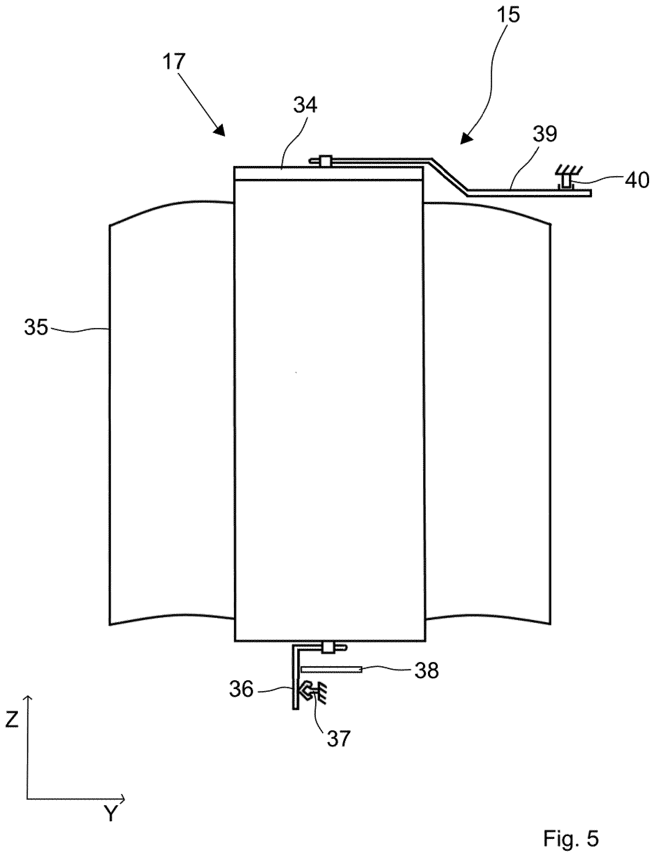

Fig. 5 ist schematisch dargestellt, wie die Reinigungseinrichtung 15 an einer beispielhaften Führungseinrichtung aufgenommen sein kann. Die rotierende Bürste kann einen Grundkörper 34 aufweisen, in dem insbesondere ein Antrieb für die Rotationsbewegung der rotierenden Bürste 17 angeordnet sein kann. Auf dem Grundkörper kann ein, insbesondere abnehmbarer, Bürstenbesatz 35 angebracht sein.

Eine untere Halterung 36 kann die Reinigungseinrichtung 15 mit einer unteren Führung 37 verbinden. Die Verbindung zwischen der unteren Halterung 36 und der unteren Führung 37 kann so gestaltet sein, dass die Gewichtskraft der Reinigungseinrichtung 15 in die untere Führung 37 eingeleitet werden kann. Die untere Halterung 36 kann, wie im gezeigten Beispiel, ein Spritzschutzelement 38, welches zwischen der Reinigungseinrichtung 15 und der unteren Führung 37 angeordnet ist, untergreifen.

Eine obere Halterung 39 kann die Reinigungseinrichtung 15 mit einer oberen Führung 40 verbinden. Hierbei kann, wie im gezeigten Beispiel, die obere Halterung 39 so gestaltet sein, dass der Punkt, an dem die obere Halterung 39 mit der Reinigungseinrichtung 15 verbunden ist, in Höhenrichtung Z der Vorrichtung 1 auf einem höheren Niveau liegt als die Verbindung zwischen oberer Führung 40 und obere Halterung 39. Im gezeigten Beispiel wird dies insbesondere durch die gewinkelte Gestaltung der oberen Halterung 39 ermöglicht.

Die Erfindung ist nicht auf die beschriebenen Ausführungsformen beschränkt. Sie kann im Rahmen der Ansprüche variiert werden.

### Bezugszeichenliste

- 1: Vorrichtung
- 2: Oberseite
- 3: Längsseite
- 4: erste Querseite
- 5: zweite Querseite
- 6: Tür
- 7: Rampe
- 8: Führungselement
- 9: Tellerdämpfer
- 10: Lenker
- 11: Sattel
- 12: Fixiereinrichtung
- 13: Verschlusselement
- 14: Dichtelement
- 15: Reinigungseinrichtung
- 16: Rahmen
- 17: Rotierende Bürste
- 18: Abweiserelement
- 19: Bodenwanne
- 20: Ultraschallgenerator
- 21: Reifen
- 22: Rotationskörper
- 23: Zugmittel
- 24: Führungselement
- 25: Führungsfläche
- 26: Bereich des Rotationskörpers
- 27: weitere rotierende Bürste
- 28: Energieführungskette
- 29: Tank
- 30: Steuerungseinrichtung
- 31: Flüssigkeitsleitelement
- 32: Kante
- 33: Räder
- 34: Grundkörper
- 35: Borstenbesatz
- 36: untere Halterung
- 37: untere Führung
- 38: Spritzschutzelement
- 39: obere Halterung
- 40: obere Führung
- 41: Abstützelement

- X: Längsrichtung
- Y: Querrichtung
- Z: Höhenrichtung

## Patentansprüche

1. Vorrichtung (1) zum Reinigen von Zweirädern, mit einem Spritzschutzgehäuse, wobei das Spritzschutzgehäuse eine Bodenwanne (19) aufweist, wobei die Vorrichtung (1) dazu ausgebildet ist das zu reinigende Zweirad, zumindest teilweise, so aufzunehmen, dass wenigstens eines der Räder des zu reinigenden Zweirades in eine in der Bodenwanne (19) enthaltene Reinigungsflüssigkeit eintaucht, wobei eine Reinigungseinrichtung (15) entlang der Längsrichtung des Zweirades mittels einer horizontalen Führungseinrichtung bewegbar ist, **dadurch gekennzeichnet, dass** die Führungseinrichtung oberhalb des Bodens der Bodenwanne (19) angeordnet ist.

2. Vorrichtung (1) nach Anspruch 1, **dadurch gekennzeichnet, dass** die Führungseinrichtung eine obere Führung (40) und/oder eine untere Führung (37) aufweist, entlang derer die Reinigungseinrichtung (15) verschiebbar ist, insbesondere wobei die Gewichtskraft der Reinigungseinrichtung (15), zumindest überwiegend, von der unteren Führung (37) aufgenommen wird.

3. Vorrichtung (1) nach Anspruch 2, **dadurch gekennzeichnet, dass** die obere Führung (40) gegenüber der unteren Führung (37) und/oder der Rotationsachse einer rotierenden Bürste (17) der Reinigungseinrichtung (15) in Querrichtung (Y) des Zweirades vom Zweirad weg versetzt, insbesondere um einen Abstand in horizontaler Richtung von wenigstens 10 Zentimeter versetzt, angeordnet ist.

4. Vorrichtung (1) nach Anspruch 2 oder 3, **dadurch gekennzeichnet, dass** die Vorrichtung (1) eine obere Halterung (39) aufweist, die die Reinigungseinrichtung (15) mit der oberen Führung (40) verbindet, wobei die obere Halterung (40) derart gestaltet und angeordnet ist, dass sich die Verbindung zwischen der oberen Halterung (40) und der Reinigungseinrichtung (15) auf einem höheren Niveau in Höhenrichtung (Z) der Vorrichtung (1) befindet als die Verbindung zwischen der oberen Halterung (39) und der oberen Führung (40).

5. Vorrichtung (1) nach einem der vorigen Ansprüche, **dadurch gekennzeichnet, dass** die Reinigungseinrichtung (15) durch eine Pneumatik und/oder einen elektrischen Antrieb bewegbar ist.

6. Vorrichtung (1) nach einem der vorigen Ansprüche, **dadurch gekennzeichnet, dass** die Reinigungseinrichtung (15) eine rotierende Bürste (17) aufweist, insbesondere wobei es sich um eine Hybrid-Bürste mit Borsten und Schaumstoffelementen handelt.

7. Vorrichtung (1) nach Anspruch 6, **dadurch gekennzeichnet, dass** die rotierende Bürste durch eine Lageranordnung gelagert ist, die zwei Radiallager und ein Axiallager aufweist.

8. Vorrichtung (1) nach einem der vorigen Ansprüche, **dadurch gekennzeichnet, dass** die Vorrichtung (1) eine, insbesondere oberhalb von der rotierenden Bürste (17) angeordnete Energieführungskette (28) zur Versorgung der Reinigungseinrichtung (15) mit Reinigungsflüssigkeit und/oder elektrischer Energie aufweist, insbesondere wobei die durch die Glieder der Energieführungskette (28) vorgegebene Krümmungsebene der Energieführungskette (28) horizontal oder zumindest im Wesentlichen horizontal verläuft.

9. Vorrichtung (1) nach einem der vorigen Ansprüche, **dadurch gekennzeichnet, dass** das Spritzschutzgehäuse an einer Oberseite (2) eine mit einer Spritzschutzabdeckung verschließbare Öffnung aufweist, insbesondere wobei die Vorrichtung (1) derart gestaltet ist, dass Teile des Zweirades durch die Spritzschutzabdeckung hindurchführbar sind, so dass sich Teile des Zweirades, insbesondere Lenker und/oder Sattel außerhalb des Spritzschutzgehäuses befinden.

10. Vorrichtung (1) nach einem der vorigen Ansprüche, **dadurch gekennzeichnet, dass** die Vorrichtung (1) im Bereich der Stirnseite eine herunterklappbare Rampe (7) aufweiset, die als Auffangwanne für Reinigungsflüssigkeit ausgebildet ist.

11. Vorrichtung (1) nach einem der vorigen Ansprüche, **dadurch gekennzeichnet, dass** die Vorrichtung (1) eine Raddreheinheit zum Drehen eines Rades des Zweirades aufweist, insbesondere wobei die Raddreheinheit eine Mehrzahl in Längsrichtung (X) des Zweirades hintereinander angeordnete Rotationskörper (22) aufweist.

12. Vorrichtung (1) nach einem der vorigen Ansprüche, **dadurch gekennzeichnet, dass** die Vorrichtung (1) einen Hydrozyklon zum Abscheiden von Schmutzpartikeln aufweist, insbesondere wobei die Trennungskorngröße des Hydrozyklons wenigstens 1 µm, insbesondere wenigstens 3 µm, und/oder höchstens 10 µm, insbesondere höchstens 7 µm, beträgt.

13. Vorrichtung (1) nach einem der vorigen Ansprüche, **dadurch gekennzeichnet, dass** die Vorrichtung (1) zum Reinigen von zum Reinigen der Gegenstände verwendeter Reinigungsflüssigkeit eine Hydrozyklonanordnung mit einer Mehrzahl, insbesondere in Reihe geschalteter, Hydrozyklone aufweist.

14. Vorrichtung (1) nach einem der Ansprüche 3 bis 13, **dadurch gekennzeichnet, dass** die Bewegung der Reinigungseinrichtung (15) entlang der Längsrichtung (X) des Zweirades durch einen Antrieb bewirkt wird, der gleichzeitig die Rotation der Bürste (17) der Reinigungseinrichtung (15) bewirkt.

15. Vorrichtung (1) nach einem der vorigen Ansprüche, **dadurch gekennzeichnet, dass** das Spritzschutzgehäuse Verkleidungselemente aus Kunststoff aufweist, die an einem Rahmen, insbesondere an einem Rahmen aus einem metallischen Werkstoff, angebracht sind

## Claims

1. Device (1) for cleaning two-wheeled vehicles, having an anti-splash housing, wherein the anti-splash housing has a floor tray (19), wherein the device (1) is configured to accommodate the two-wheeled vehicle to be cleaned, at least in part, such that at least one of the wheels of the two-wheeled vehicle to be cleaned is immersed in a cleaning liquid contained in the floor tray (19), wherein a cleaning device (15) is movable along the longitudinal direction of the two-wheeled vehicle by means of a horizontal guiding device, **characterized in that** the guiding device is disposed above the floor of the floor tray (19).

2. Device (1) according to claim 1, **characterized in that** the guiding device has an upper guideway (40) and/or a lower guideway (37), along which the cleaning device (15) can be displaced, in particular wherein the weight force of the cleaning device (15) is, at least predominantly, absorbed by the lower guideway (37).

3. Device (1) according to claim 2, **characterized in that** opposite the lower guideway (37) and/or the rotational axis of a rotating brush (17) of the cleaning device (15), the upper guideway (40) is disposed offset from the two-wheeled vehicle, in particular offset by a distance in the horizontal direction of at least 10 centimetres, in the transverse direction (Y) of the two-wheeled vehicle.

4. Device (1) according to claim 2 or 3, **characterized in that** the device (1) has an upper fixture (39) connecting the cleaning device (15) with the upper guideway (40), wherein the upper fixture (40) is designed and disposed such that the connection between the upper fixture (40) and the cleaning device (15) is located on a higher level in the vertical direction (Z) of the device (1) than the connection between the upper fixture (39) and the upper guideway (40).

5. Device (1) according to one of the preceding claims, **characterized in that** the cleaning device (15) is movable by a pneumatic system and/or an electric drive.

6. Device (1) according to one of the preceding claims, **characterized in that** the cleaning device (15) has a rotating brush (17), in particular wherein the latter is a hybrid brush having bristles and foam elements.

7. Device (1) according to claim 6, **characterized in that** the rotating brush is mounted by a bearing arrangement having two radial bearings and an axial bearing.

8. Device (1) according to one of the preceding claims, **characterized in that** the device (1) has a power track chain (28), in particular disposed above the rotating brush (17), for supplying the cleaning device (15) with cleaning liquid and/or electric power, in particular wherein the curvature plane of the power track chain (28) defined by the links of the power track chain (28) runs horizontally or at least substantially horizontally.

9. Device (1) according to one of the preceding claims, **characterized in that** on an upper side (2), the anti-splash housing has an opening which can be closed by an anti-splash cover, in particular wherein the device (1) is designed such that parts of the two-wheeled vehicle can be guided through the anti-splash cover so that parts of the two-wheeled vehicle, in particular the handlebar and/or seat, are located outside of the anti-splash housing.

10. Device (1) according to one of the preceding claims, **characterized in that** in the vicinity of its front side, the device (1) has a fold-down ramp (7) configured as a collecting tray for cleaning liquid.

11. Device (1) according to one of the preceding claims, **characterized in that** the device (1) has a wheel-turning unit for turning a wheel of the two-wheeled vehicle, in particular wherein the wheel-turning unit has a plurality of rotational solids (22) arranged successively in the longitudinal direction (X) of the two-wheeled vehicle.

12. Device (1) according to one of the preceding claims, **characterized in that** the device (1) has a hydrocyclone for separating dirt particles, in particular wherein the separation particle size of the hydrocyclone is at least 1 µm, in particular at least 3 µm, and/or at most 10 µm, in particular at most 7 µm.

13. Device (1) according to one of the preceding claims, **characterized in that** the device (1) has a hydrocyclone arrangement having a plurality of, in particular series-connected, hydrocyclones for cleaning the cleaning liquid used for cleaning the objects.

14. Device (1) according to one of claims 3 to 13, **characterized in that** the movement of the cleaning device (15) along the longitudinal direction (X) of the two-wheeled vehicle is caused by a drive causing simultaneously the rotation of the brush (17) of the cleaning device (15).

15. Device (1) according to one of the preceding claims, **characterized in that** the anti-splash housing has lining elements of plastic mounted on a frame, in particular a frame of a metallic material.

## Revendications

1. Dispositif (1) de nettoyage de véhicules à deux-roues, comprenant un boîtier de protection contre les projections, le boîtier de protection contre les projections comprenant un bac de plancher (19), le dispositif (1) étant conçu pour accueillir au moins partiellement le véhicule à deux-roues à nettoyer de sorte qu'au moins l'une des roues du véhicule à deux-roues à nettoyer trempe dans un liquide de nettoyage contenu dans le bac de plancher (19), un dispositif de nettoyage (15) pouvant être déplacé le long de la direction longitudinale du véhicule à deux-roues au moyen d'un dispositif de guidage horizontal, **caractérisé en ce que** le dispositif de guidage est agencé au-dessus du fond du bac de plancher (19).

2. Dispositif (1) selon la revendication 1, **caractérisé en ce que** le dispositif de guidage présente un guide supérieur (40) et/ou un guide inférieur (37) le long duquel le dispositif de nettoyage (15) peut coulisser, en particulier le poids du dispositif de nettoyage (15) étant supporté, au moins de manière prédominante, par le guide inférieur (37).

3. Dispositif (1) selon la revendication 2, **caractérisé en ce que** le guide supérieur (40) est agencé décalé par rapport au guide inférieur (37) et/ou à l'axe de rotation d'une brosse rotative (17) du dispositif de nettoyage (15) dans la direction transversale (Y) du véhicule à deux-roues, en particulier décalé d'une distance dans la direction horizontale d'au moins 10 centimètres.

4. Dispositif (1) selon la revendication 2 ou 3, **caractérisé en ce que** le dispositif (1) présente un support supérieur (39) qui relie le dispositif de nettoyage (15) au guide supérieur (40), le support supérieur (40) étant configuré et agencé de telle sorte que la liaison entre le support supérieur (40) et le dispositif de nettoyage (15) se trouve à un niveau plus élevé dans la direction de la hauteur (Z) du dispositif (1) que la liaison entre le support supérieur (39) et le guide supérieur (40).

5. Dispositif (1) selon l'une des revendications précédentes, **caractérisé en ce que** le dispositif de nettoyage (15) peut être déplacé par un entraînement pneumatique et/ou électrique.

6. Dispositif (1) selon l'une des revendications précédentes, **caractérisé en ce que** le dispositif de nettoyage (15) comprend une brosse rotative (17), en particulier une brosse hybride avec des poils et des éléments en mousse.

7. Dispositif (1) selon la revendication 6, **caractérisé en ce que** la brosse rotative est soutenue par un agencement de palier qui présente deux paliers radiaux et un palier axial.

8. Dispositif (1) selon l'une des revendications précédentes, **caractérisé en ce que** le dispositif (1) comprend une chaîne de guidage d'énergie (28) agencée en particulier au-dessus de la brosse rotative (17) pour alimenter le dispositif de nettoyage (15) en liquide de nettoyage et/ou en énergie électrique, en particulier dans lequel le plan de courbure de la chaîne de guidage d'énergie (28) prédéterminé par les maillons de la chaîne de guidage d'énergie (28) s'étend horizontalement ou au moins essentiellement horizontalement.

9. Dispositif (1) selon l'une des revendications précédentes, **caractérisé en ce que** le boîtier de protection contre les projections comprend, au niveau d'un côté supérieur (2), une ouverture pouvant être fermée par un couvercle de protection contre les projections, en particulier le dispositif (1) étant configuré de telle sorte que des parties du véhicule à deux-roues peuvent être passées à travers le couvercle de protection contre les projections, de sorte que des parties du véhicule à deux-roues, en particulier le guidon et/ou la selle, se trouvent à l'extérieur du boîtier de protection contre les projections.

10. Dispositif (1) selon l'une des revendications précédentes, **caractérisé en ce que** le dispositif (1) comprend, dans la zone de la face avant, une rampe (7) rabattable vers le bas, qui est réalisée sous la forme d'un bac collecteur pour le liquide de nettoyage.

11. Dispositif (1) selon l'une des revendications précédentes, **caractérisé en ce que** le dispositif (1) comprend une unité de rotation de roue pour faire tourner une roue du véhicule à deux-roues, en particulier l'unité de rotation de roue comprenant une pluralité de corps rotatifs (22) agencés les uns derrière les autres dans la direction longitudinale (X) du véhicule à deux-roues.

12. Dispositif (1) selon l'une des revendications précédentes, **caractérisé en ce que** le dispositif (1) comprend un hydrocyclone pour séparer des particules de saleté, en particulier la granulométrie de séparation de l'hydrocyclone étant d'au moins 1 µm, en particulier d'au moins 3 µm, et/ou d'au plus 10 µm, en particulier d'au plus 7 µm.

13. Dispositif (1) selon l'une des revendications précédentes, **caractérisé en ce que** le dispositif (1) pour nettoyer le liquide de nettoyage utilisé pour nettoyer les articles comprend un agencement d'hydrocyclones avec une pluralité d'hydrocyclones, en particulier connectés en série.

14. Dispositif (1) selon l'une des revendications 3 à 13, **caractérisé en ce que** le déplacement du dispositif de nettoyage (15) le long de la direction longitudinale (X) du véhicule à deux-roues est provoqué par un entraînement qui provoque simultanément la rotation de la brosse (17) du dispositif de nettoyage (15).

15. Dispositif (1) selon l'une des revendications précédentes, **caractérisé en ce que** le boîtier de protection contre les projections comprend des éléments d'habillage en matière plastique qui sont montés sur un cadre, en particulier sur un cadre réalisé en un matériau métallique.
